# EUROPEAN PATENT APPLICATION

(11) **EP 2 360 519 A1**
(43) Date of publication of application: **24.08.2011**
(21) Application number: 09833233.1
(22) Date of filing: 18.12.2009
(51) Int. Cl.: G02F 1/167, G02F 1/17

(54) **INFORMATION DISPLAY PANEL**

(30) Priority: 18.12.2008 JP 2008322580; 18.12.2008 JP 2008322753
(71) Applicant: Bridgestone Corporation, Tokyo 104-8340 (JP)
(72) Inventor: OHNO, Shingo, Kodaira-shi Tokyo 187-8531 (JP); TANAKA, Kanji, Kodaira-shi Tokyo 187-8531 (JP); SAKURAI, Ryo, Kodaira-shi Tokyo 187-8531 (JP)
(74) Representative: Lamb, Martin John Carstairs
(86) International application number: PCT/JP2009/007025
(87) International publication number: WO 2010/070926

(57) **Abstract**

Provided is an information display panel, in which transparent stripe electrodes on a first substrate and stripe electrodes on a second substrate are orthogonally opposed to each other, and at least two kinds of display media configured as particle groups containing electrically charged particles are sealed in a space between the first substrate and the second substrate which are opposed to each other in the information display screen region while the line electrodes drawn from the stripe electrodes on the first substrate and the L-shaped line electrodes formed on the third substrate are electrically connected to each other, so that, in a configuration where the first substrate, the second substrate, and the film-like third substrate having the L-shaped line electrodes formed thereon are arranged as being superposed one another in the stated order, the stripe electrodes opposing to each other forms an electrode pair, to which a voltage controlled by the driver circuit is applied so as to generate an electric field for causing the display media to move, to thereby display information.

## Description

### TECHNICAL FIELD

The present invention relates to an information display panel in which at least two kinds of display media configured as particle groups including electrically charged particles, the display media being different from each other in color and charging characteristics, are sealed in a plurality of cells formed between an observation-side panel substrate and a back-side panel substrate, and these two kinds of display media are inversely driven by an electric field generated through an application of a voltage to a counter electrode formed of electrodes which are provided on the two panel substrates and opposed to each other, to thereby display information such as an image.

### RELATED ART

Conventionally, there has been known an information display panel in which a display medium is sealed between a transparent front substrate and a back substrate that is not required to be transparent and a voltage is applied between electrodes provided on the respective substrate to impart an electric field to the display medium so as to move the display medium, to thereby display information such as a image, which is characterized by including: a first stripe electrode made of a transparent inorganic conductive film disposed in at least a display region of the front substrate; a second stripe electrode made of a metal film disposed in at least the display region of the back substrate and approximately orthogonal to the first stripe electrode; a second leading line disposed outside the display region of the back substrate, made of a metal film and connected to the second stripe electrode; and a first leading line disposed outside of the display region of the back substrate, made of a metal film and connected to the first stripe substrate (see JP 2007-322805 A).

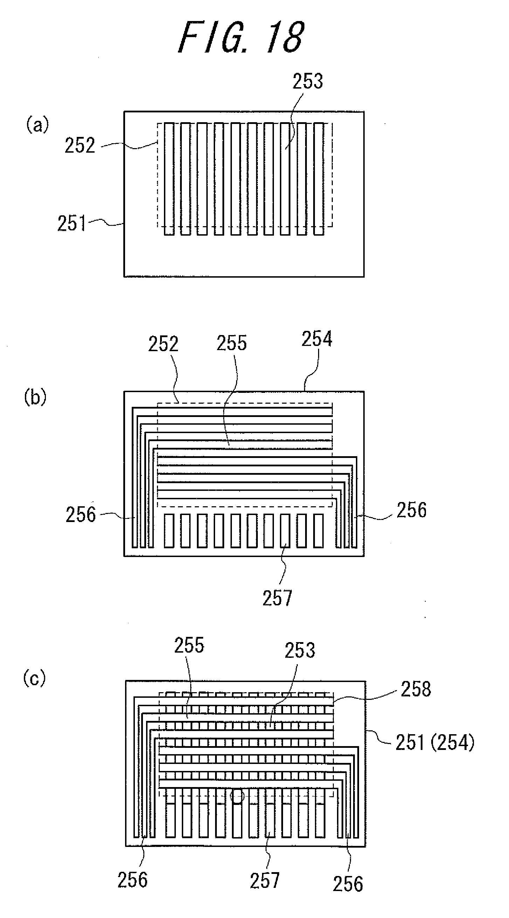

Figs. 18(a) to 18(c) are diagrams for illustrating an example of the conventional information display panel described above. First, as illustrated in Fig. 18(a), a first stripe electrode 253 made of a transparent inorganic conductive film such as indium tin oxide (ITO) is formed through patterning in a position corresponding at least to an information display screen region 242 of an observation-side substrate 251 formed of, for example, a transparent film-like substrate. Next, as illustrated in Fig. 18(b), on the back-side substrate 254, a second stripe electrode 244, a second leading line 256, and a first leading line 257, which are all made of a metal film, are formed through patterning.

Here, the second stripe electrode 255 is formed so as to be substantially orthogonal to the first stripe electrode 253 when the observation-side substrate 251 and the back-side substrate 254 are superposed each other in a position corresponding at least to an information display screen region 252 on the back-side substrate 254. Further, the second leading line 256 is connected to the second stripe electrode 255 in a position outside the information display screen region 252 on the back-side substrate 2, and formed as being routed to a one end face of the panel (the one end for receiving a tape carrier package (TPC) to be mounted thereon). Further, the first leading line 257 is formed from the one end face of the panel in such a manner that the end of the first stripe electrode and the end of the first leading line 257 are vertically superposed each other in a position outside the information display screen region 252 of the back-side substrate 254, when the observation side substrate 251 and the back-side substrate 254 are superposed each other.

Lastly, as illustrated in Fig. 18(c), an anisotropic conductive connecting material (herein, anisotropic conductive sealing agent) 258 containing conductive particles and having anisotropic conductivity is formed in the outer periphery of the information display screen region 252 so as to surround the information display screen region 252 and to be arranged in portions (one of the portions is encircled in the drawing) where the end of the first stripe electrode 253 and the end of the first leading line 257 overlap each other, and then the observing-side substrate 251 and the back-side substrate 254 are bonded to each other, to thereby obtain the information display panel. Here, the anisotropic conductive sealing agent is used to establish conduction. However, an adhesive agent for bonding the two substrates may also be used to realize such function.

### DISCLOSURE OF THE INVENTION

### PROBLEMS TO BE SOLVED BY THE INVENTION

In the conventional information display panel described above, when connecting terminals of the leading line for connecting the electrodes on the respective panel substrates to a driver circuit are collected on one side of one of the panel substrates in order to connect the connecting terminals and the driver circuit to each other, leading lines of the other panel substrate need to be routed as being bent at 90 degrees. The area where the leading lines of the other panel substrate are arranged in such a manner cannot perform information display, the area being so-called frame, with the result that an area to be formed as a display screen in the entire surface of the panel is reduced.

Further, in connecting the connecting terminals collected on the one side of one of the panel substrate to the driver circuit, there may be employed a technology of directly mounting a driver IC chip (such as COG, which involves mounting an IC chip on a glass substrate, COF, which involves mounting an IC chip on a film-like substrate, or COP, which involves mounting an IC chip on a plastic substrate) or there may be employed a flexible cable substrate mounted with a driver IC chip through TAB. In such a case, a plurality of the driver IC chips or a plurality of the flexible cable substrates mounted with driver IC chips through TAB need to be connected as being arranged side by side, and hence the panel substrate to be used needs to have a side longer than the total length in which the plurality of the driver IC chips or a plurality of the flexible cable substrates are arranged side by side, which also leads to an increase in the frame area.

In order to solve the above-mentioned problems, the present invention has been made, and it is an object of the invention to provide an information display panel capable of narrowing the frame of the panel even in a case where connecting terminals of leading lines for connecting electrodes on each panel substrate to a driver circuit are collected on one side or on two opposing sides of one of the panel substrates or on two opposing sides.

### MEANS FOR SOLVING THE PROBLEM

The information display panel according to the present invention, which is configured as a dot matrix type information display panel, includes: a first substrate on which transparent stripe electrodes are formed in an information display screen region and line electrodes drawn from the stripe electrodes are formed in a region outside the information display screen region; a film-like second substrate on which stripe electrodes are formed in the information display screen region and line electrodes drawn from the stripe electrodes are formed in a region outside the information display screen region; and a film-like third substrate on which L-shaped line electrodes are formed, the L-shaped line electrodes serving as connection wiring to a driver circuit, in which the transparent stripe electrodes on the first substrate and the stripe electrodes on the second substrate are orthogonally opposed to each other, and at least two kinds of display media configured as particle groups containing electrically charged particles are sealed in a space between the first substrate and the second substrate which are opposed to each other in the information display screen region while the first substrate, the second substrate, and the film-like third substrate having the L-shaped line electrodes formed thereon are arranged as being superposed one another in the stated order so that the line electrodes drawn from the stripe electrodes on the first substrate and the L-shaped line electrodes formed on the third substrate are electrically connected to each other; and in which the stripe electrodes opposing to each other form electrode pairs to which a voltage controlled by the driver circuit is applied so as to generate an electric field for causing the display media to move, to thereby display information.

Further, in a preferred example of the information display panel according to the present invention, the line electrodes drawn from the stripe electrodes on the first substrate and the line electrodes on the film-like third substrate, the line electrodes on the third substrate serving as connection wiring to a driver circuit, are electrically connected to each other by means of an anisotropic conductive connecting material which is formed by including conductive particles in a non-conductive resin.

Further, in another preferred example of the information display panel according to the present invention, the L-shaped line electrodes formed on the film-like third substrate are configured in such a manner that the number thereof is equal to or smaller than the number of output terminals of one driver IC disposed on the way to be connected to a driver circuit side or disposed as part of the driver circuit side, and that the number thereof corresponds to the number of stripe electrodes formed on the transparent first substrate.

Furthermore, in further another preferred example of the information display panel according to the present invention, the film-like third substrate is configured in such a manner that the number thereof is equal to or smaller than the number of the driver ICs disposed on the way to be connected to the driver circuit side or disposed as part of the driver circuit side, and that the number thereof corresponds to the number of driver ICs required for the number of stripe electrodes formed on the transparent first substrate.

Further, in further another preferred example of the information display panel according to the present invention, the film-like second substrate is 25 µm to 200 µm in thickness.

Further, in further another preferred example of the information display panel according to the present invention, the film-like third substrate is 25 µm to 200 µm in thickness.

Furthermore, in further another preferred example of the information display panel according to the present invention, the electrodes on the first substrate and the electrodes on the third substrates are connected through the anisotropic conductive connecting material in such a manner that the film-like third substrate is deflected so as to reduce an inter-substrate distance to a length of a particle diameter of the conductive particles contained in the anisotropic conductive connecting material.

Further, in further another preferred example of the information display panel according to the present invention, the line electrodes for connection wiring to the driver circuit, the line electrodes being formed on the film-like third substrate, are extracted to a side of the panel to which the line electrodes drawn from the stripe electrodes on the film-like second substrate are extracted, or to a side opposite to the side of the panel to which the line electrodes drawn from the stripe electrodes on the film-like second substrate are extracted, or to the two opposing sides of the panel.

### EFFECT OF THE INVENTION

According to the present invention, the information display panel, which is configured as a dot matrix information display panel, includes: a first substrate on which transparent stripe electrodes are formed in an information display screen region and line electrodes drawn from the stripe electrodes are formed in a region outside the information display screen region; a film-like second substrate on which stripe electrodes are formed in the information display screen region and line electrodes drawn from the stripe electrodes are formed in a region outside the information display screen region; and a film-like third substrate having L-shaped line electrodes formed thereon, the L-shaped line electrodes serving as connection wiring to a driver circuit, in which the transparent stripe electrodes on the first substrate and the stripe electrodes on the second substrate are orthogonally opposed to each other, and at least two kinds of display media configured as particle groups containing electrically charged particles are sealed in a space between the first substrate and the second substrate which are opposed to each other in the information display screen region while the film-like third substrate having the L-shaped line electrodes formed thereon are arranged as being superposed one another in the stated order in such a manner that the line electrodes drawn from the stripe electrodes on the first substrate and the L-shaped line electrodes formed on the third substrate are electrically connected to each other. With this configuration, a smaller area is occupied by the line electrodes drawn from the stripe electrodes to the region outside the information display screen region, which enables to reduce the frame portion in area.

Further, according to the present invention, the information display panel, which is configured as a dot matrix information display panel, includes: a first substrate on which transparent stripe electrodes are formed in an information display screen region and line electrodes drawn from the stripe electrodes are formed in a region outside the information display screen region; a film-like second substrate on which stripe electrodes are formed in the information display screen region and line electrodes drawn from the stripe electrodes are formed in a region outside the information display screen region; and a film-like third substrate having L-shaped line electrodes formed thereon, the L-shaped line electrodes serving as connection wiring to a driver circuit, in which the transparent stripe electrodes on the first substrate and the stripe electrodes on the second substrate are orthogonally opposed to each other, and at least two kinds of display media configured as particle groups containing electrically charged particles are sealed in a space between the first substrate and the second substrate which are opposed to each other in the information display screen region while the film-like third substrate having the L-shaped line electrodes formed thereon are arranged as being superposed one another in the stated order in such a manner that the line electrodes drawn from the stripe electrodes on the first substrate and the L-shaped line electrodes formed on the third substrate are electrically connected to each other. With this configuration, the line electrodes routed from the stripe electrodes on the first substrate and flexible cables mounted with driver IC chips, and the line electrodes routed from the stripe electrodes on the second substrate and the flexible cables mounted with driver IC chips are aligned in two stages, rather than being arranged on one side of the same substrate, which means that connecting portions can be arranged as overlapping each other. As a result, an area in which the connecting portions mounted with driver IC chips can be reduced in length, and a panel substrate may be designed in size correspondingly to the reduced length, to thereby reduce the frame portion, which is arranged outside the information display region, on the panel surface.

### BRIEF DESCRIPTION OF THE DRAWINGS

Figs. 1(a) and 1(b) each are a view for illustrating a drive principle of an information display panel according to the present invention.
Figs. 2(a) to 2(c) are views for illustrating a first embodiment of a first substrate, a second substrate, and a third substrate forming an information display panel according to a first example of the present invention.
Figs. 3(a) and 3(b) are views for illustrating an example of the information display panel according to the first example of the present invention.
Fig. 4 is a view for illustrating an example of an ACF connection in the information display panel according to the first example of the present invention.
Figs. 5(a) to 5(c) are views for illustrating a second embodiment of the first substrate, the second substrate, and the third substrate forming the information display panel according to the first example of the present invention.
Fig. 6 is a view for illustrating another example of the information display panel according to the first embodiment of the present invention.
Figs. 7(a) to 7(c) are views for illustrating a third embodiment of the first substrate, the second substrate, and the third substrate forming the information display panel according to the first example of the present invention.
Fig. 8 is a view for illustrating further another example of the information display panel according to the first example of the present invention.
Figs. 9(a) to 9(c) are views for illustrating a fourth embodiment of the first substrate, the second substrate, and the third substrate having L-shaped line electrodes formed thereon, the substrates forming an information display panel according to a second example of the present invention.
Figs. 10(a) and 10(b) are views for illustrating an example of the information display panel according to the second example of the present invention.
Figs. 11(a) to 11(c) are views for illustrating a fifth embodiment of the first substrate, the second substrate, and the third substrate having L-shaped line electrodes formed thereon, the substrates forming the information display panel according to the second example of the present invention.
Fig, 12 is a view for illustrating another example of the information display panel according to the second example of the present invention.
Figs. 13 (a) to 13(c) are views for illustrating a sixth embodiment of the first substrate, the second substrate, and the third substrate having L-shaped line electrodes formed thereon, the substrates forming the information display panel according to the second example of the present invention.
Fig. 14 is a view for illustrating further another example of the information display panel according to the second example of the present invention.
Figs. 15(a) and 15(b) are views for illustrating a seventh embodiment of the first substrate, the second substrate, and the third substrate having L-shaped line electrodes formed thereon, the substrates forming the information display panel according to the second example of the present invention.
Figs. 16(a) and 16(b) are schematic diagrams each illustrating a driver IC-mounted TCP end face, which are viewed from the side A and the side B of Fig. 15(b), respectively.
Figs. 17(a) to 17(c) are views for illustrating examples, other than the examples illustrated in Figs. 16(a) and 15(b), of the arrangement of the TCP mounted onto a third substrate at the edge of the information display panel according to the present invention.
Figs. 18(a) to 18(c) are views for illustrating an example of a conventional information display panel.

### BEST MODE FOR CARRYING OUT THE INVENTION

First, a drive principle of an information display panel according to the present invention is described. In the information display panel according to the present invention, an electric field is applied to a display medium configured as a particle group containing electrically charged particles sealed between two opposing substrates. The display medium is attracted, along the direction of the electric field thus applied, by a force generated by the electric field or Coulomb's force, and the display medium moves according to the change in the direction of the electric field, with the result that information such as an image is displayed. Therefore, the information display panel needs to be designed such that uniform movement of the display medium can be ensured and that stable operation of the display medium in repeatedly rewriting display information or in continuously displaying display information can be maintained. Here, conceivable forces to be applied to the particles forming the information medium may include, other than the attracting force generated between the particles due to Coulomb's force, an electric image force, an intermolecular force, a capillary force, and a gravitational force with respect to electrodes or substrates.

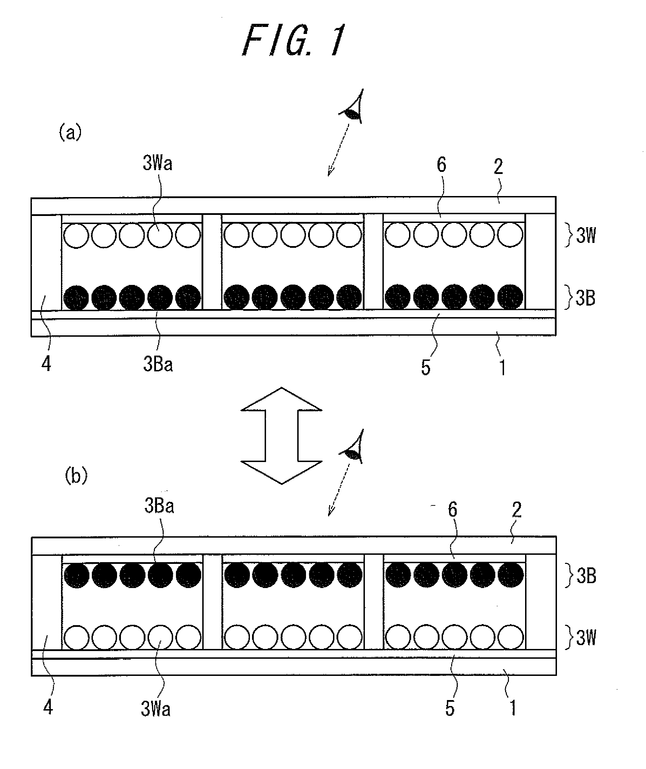

A drive principle of the information display panel according to the present invention is described with reference to Figs. 1(a) and 1(b). In examples illustrated in Figs. 1(a) and 1(b), at least two types of display media (illustrated as a white display medium 3W configured as a particle group containing negatively-charged white particles 3Wa and a black display medium 3B configured as a particle group containing positively-charged black particles 3Ba) which are configured as particle groups containing particles each having at least an optical reflectivity and charging properties, the two display media being different in optical reflectivity and charging characteristics, are arranged in each cell formed by partition walls 4. A stripe electrode 6 formed on a substrate 2 and a stripe electrode 5 formed on a substrate 1 are orthogonally opposed to each other, to thereby form a pixel electrode pair, A voltage is applied to the pixel electrode pair to thereby generate an electric field, so that the display media are moved perpendicularly to the substrates 1 and 2 according to the electric field thus generated. Then, as illustrated in Fig. 1(a), the white display medium 3W is to be visually identified by an observer, or, as illustrated in Fig. 1(b), the black display medium 3B is to be visually identified by an observer, with the result that black and white dot matrix display is performed. It should be noted that, in Figs. 1(a) and 1(b), partition walls provided on the near side are not illustrated. Here, the partition walls are formed in such a manner that each cell corresponds to each pixel. However, the partition walls may be formed irrespective of the position of each pixel.

### [As to First Example (which employs one Third Substrate having L-shaped Line Electrodes formed thereon)]

An information display panel according to a first example of the present invention, which is configured as a dot matrix information display panel, includes: a first substrate on which transparent stripe electrodes are formed in an information display screen region and line electrodes drawn from the stripe electrodes are formed in a region outside the information display screen region; a film-like second substrate on which stripe electrodes are formed in the information display screen region and line electrodes drawn from the stripe electrodes are formed in a region outside the information display screen region; and a film-like third substrate on which L-shaped line electrodes are formed, the L-shaped line electrodes serving as connection wiring to a driver circuit, in which the transparent stripe electrodes on the first substrate and the stripe electrodes on the second substrate are orthogonally opposed to each other, and at least two kinds of display media configured as particle groups containing electrically charged particles are sealed in a space between the first substrate and the second substrate which are opposed to each other in the information display screen region while the first substrate, the second substrate, and the film-like third substrate having the L-shaped line electrodes formed thereon are arranged as being superposed one another in the stated order so that the line electrodes drawn from the stripe electrodes on the first substrate and the L-shaped line electrodes formed on the third substrate are electrically connected to each other; and in which the stripe electrodes opposing to each other form electrode pairs to which a voltage controlled by the driver circuit is applied so as to generate an electric field for causing the display media to move, to thereby display information. The information display panel is characterized in that one of the film-shaped third substrate having L-shaped line electrodes formed thereon is employed.
It should be noted that the L-shaped electrodes to be formed on the film-like third substrate do not need to be wired in a complete "L-shape", as long as both ends to serve as connecting terminals are arranged at 90 degrees and the both terminals juxtaposed to each other are connected via the line electrodes formed in stripes. The line electrodes formed at 90 degrees are preferred to be in an L shape with a round corner of 114 arc in view of reducing the length of the electrodes.

In the following, specific examples of the information display panel according to the first example of the present invention are described with reference to the drawings.

### <First Embodiment>

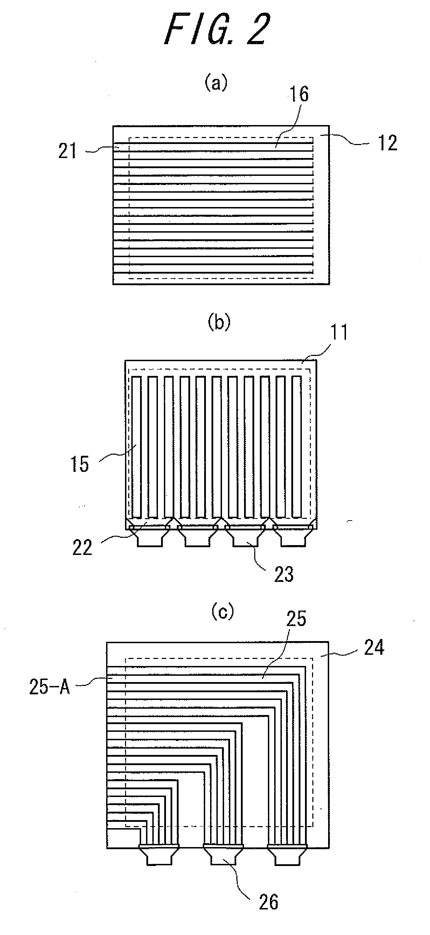

Figs. 2(a) to 2(c) are views for illustrating a first embodiment of the first substrate, the second substrate, and the third substrate forming the information display panel according to a first example of the present invention. The first embodiment illustrated in Figs. 2(a) to 2(c) illustrates an example in which connection on the driver circuit side is performed on the same one side.

First, the first substrate (observation-side substrate) 12 illustrated in Fig. 2(a) is configured as a transparent substrate on which transparent stripe electrodes (transparent conductive film) 16 are formed in an information display screen region (region surrounded by the dotted lines in the drawing) and line electrodes (conductive film) 21 drawn from the stripe electrodes 16 are formed in a region outside the information display screen region. Next, the second substrate (back-side substrate) 11 illustrated in Fig. 2(b) is configured as a film-like substrate on which stripe electrodes (conductive film) 15 are formed in the information display screen region and line electrodes (conductive film) 22 drawn from the stripe electrodes 15 are formed in a region outside the information display screen region. The line electrodes 22 grouped correspondingly to the number of connecting terminals of a driver IC are connected, at one side of the panel, to flexible cables 23 each having a driver IC, which is to be connected to an external driver circuit side, mounted thereon through TAB. The second substrate 11 is preferred to be as small as possible in thickness, and the film-like second substrate 11 may be preferred to be 25 µm to 250 µm in thickness. Next, the third substrate 24 illustrated in Fig. 2(c) is configured as a substrate having line electrodes (conductive film) 25, which is to serve as connection wiring to a driver circuit, formed thereon in an L shape, in which the line electrodes are bent halfway at 90 degrees so that the third substrate has a connection to the driver circuit side on the same one side as a connection to the driver circuit side in the second substrate. An insulating flexible film-like substrate is employed as the third substrate 24, and a general-purpose circuit board such as a flexible printed circuit board (FPC board) is applicable thereto. The electrodes 25 are grouped correspondingly to the number of connecting terminals of the driver IC, and connected, on the same one side as the side on which the flexible cables 23 of the second substrate are arranged, to flexible cables 26 each having a driver IC, which is to be connected to an external driver circuit side, mounted therein through TAB. It should be noted that a tape carrier package (TCP) having a driver IC mounted on the flexible cables 23, 26 can be employed.

In this example, the arrangement of the line electrodes 21 drawn from the stripe electrodes 16 to the region outside the information display screen region on the first substrate 12 and leading ends 25-A of the electrodes 25 formed in plane of the third substrate 24, the leading ends being arranged in a region outside a region corresponding to the information display screen region of the first substrate, the region being opposite to a side on which the electrodes 25 are connected to the flexible cables 26, are made such that, when the first substrate 12, the second substrate 11, and the third substrate 24 are superposed one another, the line electrodes 21 and the leading ends 25-A are arranged in corresponding positions, preferably, in positions opposing to each other in a corresponding manner. Further, in this example, the third substrate 24 is configured to be longer in vertical length in the drawing than the second substrate 11 so that the flexible cables 23 of the second substrate and the flexible cables 26 of the third substrate 24 are alternately arranged when the first substrate 12, the second substrate 11, and the third substrate 24 are superposed one another. In this regard, even if the flexible cables 23 and the flexible cables 26 overlap each other in the same position, connection via the flexible cables can still be made without any problem through appropriate arrangement of connectors to be connected to the flexible cables, because the flexible cables 23 and the flexible cables 26 are provided to different substrates.

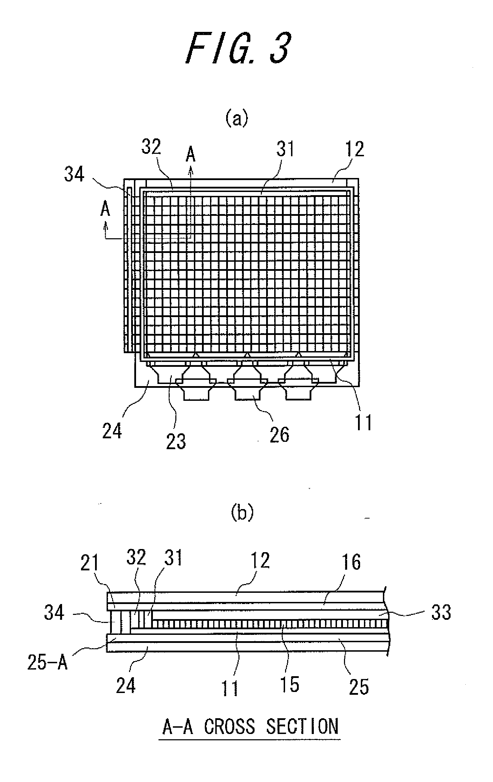

Figs. 3(a) and 3(b) are views for illustrating an example of the information display panel according to the first example of the present invention, in which Fig. 3 (a) illustrates the information display panel viewed from the observation surface side and Fig. 3(b) is a schematic cross section taken along the line A-A of Fig. 3(a). In the example illustrated in Figs. 3(a) and 3(b), each constituent element is illustrated in dimension different in ratio from the actual dimension, and the illustration of some of the constituent elements is omitted, for a better understanding of the features of the information display panel according to the first example of the present invention. The example illustrated in Figs. 3(a) and 3(b) includes the first substrate 12, the second substrate 11, and the third substrate 24 of Figs. 2(a) to 2(c), which are superposed one another in the stated order, to thereby form the information display panel.

In the example illustrated in Fig. 3(a) and 3(b), in which the first substrate 12, the second substrate 11, and the third substrate 24 are superposed one another, a frame-shaped sealing agent 32 is provided around the outer circumference of an inter-substrate gap securing partition wall 31 between the first substrate 12 and the second substrate 11, in the periphery of the information display screen region. Further, a display medium configured as a particle group containing electrically charged particles is sealed in a display medium accommodating layer 33 between the first substrate 12 and the second substrate 11. Each of the transparent stripe electrodes 16 formed on the first substrate 12 and each of the stripe electrodes 15 formed on the second substrate 11 are orthogonally opposed to each other so as to form an electrode pair, through which the display medium is applied with an electric field so as to be passively driven to perform dot matrix display, to thereby form an information display panel of dot matrix display system. It should be noted that the example of Figs. 3(a) and 3(b) merely illustrates the display medium accommodating layer 33, without illustrating the display medium. The inter-substrate gap securing partition wall 31, the frame-shaped sealing agent 32, and the sealing of the display medium are configured similarly as in the case of an information display panel hitherto known.

One of the most distinctive features of the information display panel according to the first example of the present invention resides in that, as in the example illustrated in Figs. 3(a) and 3(b), the line electrodes 21 drawn from the stripe electrodes 16 to the region outside the information display screen region on the first substrate 12 and the leading ends 25-A of the L-shaped line electrodes 25 formed on the third substrate 24, the leading end being arranged in a region outside the information display screen region, the region being opposite to a side on which the electrodes 25 are connected to the flexible cables 26, are electrically connected to each other, on an external one side of the inter-substrate gap securing partition wall 31 and the frame-shaped sealing member 32, via an anisotropic conductive connecting material 34 such as an anisotropic conductive film (ACF), to thereby establish conduction between the substrates. The anisotropic conductive film (ACF) is formed of an anisotropic conductive connecting material made of a non-conductive resin containing conductive particles, and electric connection using the ACF is similarly performed as in a conventionally-known example. It should be noted that an anisotropic conductive paste (ACP) may also be used, instead of the anisotropic conductive film (ACF).

According to the information display panel of the first example of the present invention described above, the line electrodes 21 drawn from the stripe electrodes 16 of the first substrate 12 and the leading ends 25-A of the L-shaped line electrodes 25 of the third substrate 24 are connected to each other through the anisotropic conductive connecting material 34, to thereby apply a driving voltage to the stripe electrodes 16 of the first substrate 12 via the electrodes 25 on the third substrate 24, the anisotropic conductive connecting material 34, and the line electrodes 21. The present invention enables to form the above-mentioned configuration merely by using the anisotropic conductive connecting material 34 provided in a region outside the information display screen region, with the result that the frame can be narrowed as compared to the conventional case. Further, in the case of performing connection to the driver circuit on the same one side, the flexible cables 23 and the flexible cables 26 are allowed to overlap each other because the flexible cables 23 and the flexible cables 26 can be formed on different surfaces.

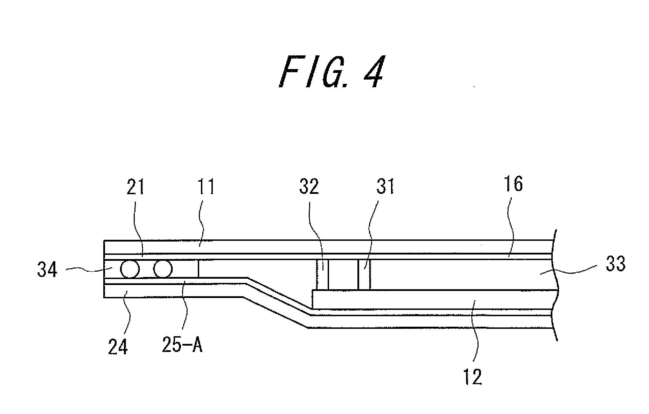

Fig. 4 is a view for illustrating another example of the inter-substrate conduction performed by using the anisotropic conductive connecting material 34 in the information display panel according to the first example of the present invention. As illustrated in Fig. 4, the third substrate 24 is configured as a film-like flexible substrate, and hence the connection through ACF can be performed by deflecting the flexible substrate 24 even if the conductive particles contained in the anisotropic conductive film (ACF) are small in particle diameter.

### <Second Embodiment>

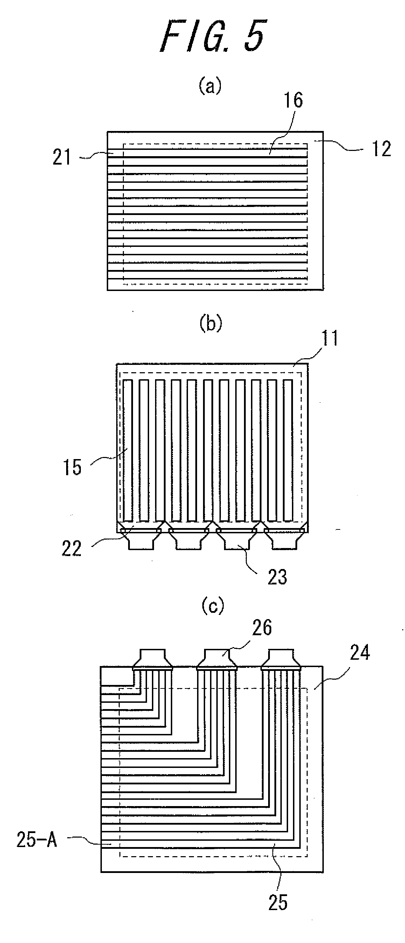

Figs. 5(a) to 5(c) are views for illustrating a second embodiment of the first substrate, the second substrate, and the third substrate forming the information display panel according to the first example of the present invention. The second embodiment illustrated in Figs. 5(a) to 5(c) illustrates an example in which connection on the driver circuit side is performed on two sides opposing to each other.

First, the first substrate (observation-side substrate) 12 illustrated in Fig. 5(a) is configured as a transparent substrate on which the transparent stripe electrodes (transparent conductive film) 16 are formed in the information display screen region (region surrounded by the dotted lines in the drawing) and the line electrodes (conductive film) 21 drawn from the stripe electrodes 16 are formed in a region outside the information display screen region. Next, the second substrate (back-side substrate) 11 illustrated in Fig. 5(b) is configured as a film-like substrate on which the stripe electrodes (conductive film) 15 are formed in the information display screen region and the line electrodes (conductive film) 22 drawn from the stripe electrodes 15 are formed in a region outside the information display screen region. The line electrodes 22 grouped correspondingly to the number of connecting terminals of a driver IC are connected, at one side of the panel, to the flexible cables 23 each having a driver IC, which is to be connected to an external driver circuit side, mounted therein through TAB. The second substrate 11 is preferred to be as small as possible in thickness. Next, the third substrate 24 illustrated in Fig. 5(c) is configured as a substrate having the line electrodes (conductive film) 25, which is to serve as connection wiring to a driver circuit, formed thereon in an L shape, in which the line electrodes are bent halfway at 90 degrees so that the third substrate has a connection to the driver circuit side on a side opposite to the side of the connection to the driver circuit side in the second substrate. An insulating flexible film-like substrate is employed as the third substrate 24, and a general-purpose circuit board such as a flexible printed circuit board (FPC board) is applicable thereto. The electrodes 25 are grouped correspondingly to the number of connecting terminals of a driver IC, and connected, on a side opposite to the side on which the flexible cables 23 of the second substrate are arranged, to the flexible cables 26 each having a driver IC, which is to be connected to an external driver circuit side, mounted therein through TAB.

In this example, the arrangement of the line electrodes 21 drawn from the stripe electrodes 16 to the region outside the information display screen region on the first substrate 12 and the leading ends 25-A of the electrodes 25 formed in a region outside the information display screen region on the third substrate 24, the leading ends being arranged in a region opposite to a side on which the electrodes 25 are connected to the flexible cables 26, are made such that, when the first substrate 12, the second substrate 11, and the third substrate 24 are superposed one another, the line electrode 21 and the leading ends 25-A are arranged in corresponding positions, preferably, in positions opposing to each other in a corresponding manner.

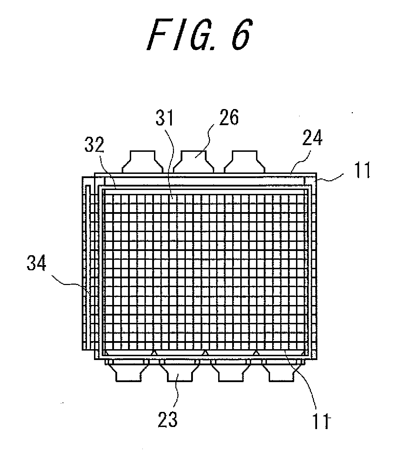

Fig. 6 is a view for illustrating another example of the information display panel according to the first example of the present invention. In the example illustrated in Fig. 6, each constituent element is illustrated in dimension different in ratio from the actual dimension, and the illustration of some of the constituent elements is omitted, for a better understanding of the features of the information display panel according to the first embodiment of the present invention. The example illustrated in Fig. 6 includes the first substrate 12, the second substrate 11, and the third substrate 24 of Figs. 5(a) to 5(c), which are superposed one another in the stated order, to thereby form the information display panel, Even in the example illustrated in Fig. 6, the configuration and effect of the anisotropic conductive connecting material 34 using the third substrate 24, which characterizes the information display panel according to the second example of the present invention, is similar to that of the examples of the first embodiment described above.

### <Third Embodiment>

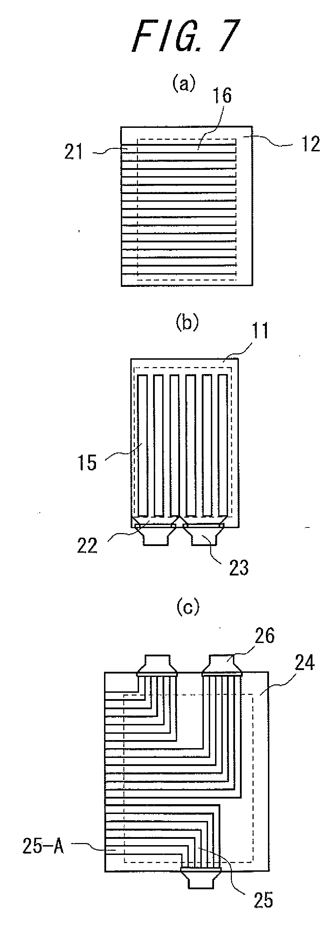

Figs, 7(a) to 7(c) are views for illustrating a third embodiment of the first substrate, the second substrate, and the third substrate forming the information display panel according to the first example of the present invention. The third embodiment illustrated Figs. 7(a) to 7(c) illustrates an example in which connection on the driver circuit side is performed on two sides opposing to each other.

First, the first substrate (observation-side substrate) 12 illustrated in Fig. 7(a) is configured as a transparent substrate on which the transparent stripe electrodes (transparent conductive film) 16 are formed in the information display screen region (region surrounded by the dotted lines in the drawing) and the line electrodes (conductive film) 21 drawn from the stripe electrodes 16 are formed in a region outside the information display screen region. Next, the second substrate (back-side substrate) 11 illustrated in Fig. 7(b) is configured as a film-like substrate on which the stripe electrodes (conductive film) 15 are formed in the information display screen region and the line electrodes (conductive film) 22 drawn from the stripe electrodes 15 are formed in a region outside the information display screen region. The line electrodes 22 grouped correspondingly to the number of connecting terminals of a driver IC are connected, at one side of the panel, to the flexible cables (also called TCP) 23 each having a driver IC, which is to be connected to an external driver circuit side, mounted therein through TAB. The second substrate 11 is preferred to be as small as possible in thickness. Next, the third substrate 24 illustrated in Fig. 7(c) is configured as a substrate in which the line electrodes (conductive film) 25 to serve as connection wiring to a driver circuit are formed in an L shape, in which the line electrodes is bent halfway at 90 degrees so that a connection to the driver circuit side comes on a side opposite to the side of the connection to the driver circuit side in the second substrate. An insulating flexible film-like substrate is employed as the third substrate 24, and a general-purpose circuit board such as a flexible printed circuit board (FPC board) is applicable thereto. The electrodes 25 are grouped correspondingly to the number of connecting terminals of a driver IC, and connected, at two sides, namely, a side on which the flexible cables 23 of the second substrate are arranged and a side opposing thereto, to flexible cables (also called TCP) 26 each having a driver IC, which is to be connected to an external driver circuit side, mounted therein through TAB.

In this example, the arrangement of the line electrodes 21 drawn from the stripe electrodes 16 to the region outside the information display screen region on the first substrate 12 and the leading ends 25-A of the electrodes 25 formed in a region outside the information display screen region on the third substrate 24, the leading ends being arranged in a region opposite to a side on which the electrodes 25 are connected to the flexible cables 26, are made such that, when the first substrate 12, the second substrate 11, and the third substrate 24 are superposed one another, the line electrode 21 and the leading ends 25-A are arranged in corresponding positions.

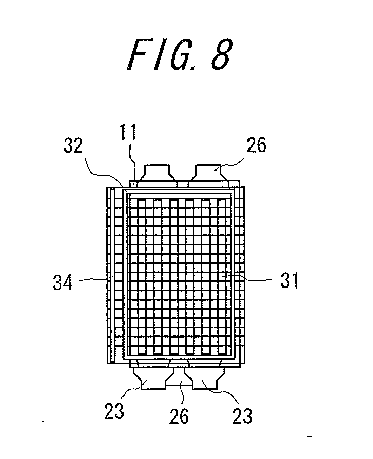

Fig. 8 is a view for illustrating further another example of the information display panel according to the first example of the present invention. In the example illustrated in Fig. 8, each constituent element is illustrated in dimension different in ratio from the actual dimension, and the illustration of some of the constituent elements is omitted, for a better understanding of the features of the information display panel according to the first embodiment of the present invention. The example illustrated in Fig. 8 includes the first substrate 12, the second substrate 11, and the third substrate 24 of Figs. 7(a) to 7(c), which are superposed one another in the stated order, to thereby form the information display panel. Even in the example illustrated in Fig. 8, the configuration and effect of the anisotropic conductive connecting material 34 using the third substrate 24, which characterizes the information display panel of the present invention, is similar to that of the examples of the first embodiment described above.

In the following, actual examples of the information display panel according to the first example are described. It should be noted that Examples 1 to 5 described in below were configured as follows. That is, the line electrodes formed on the third substrate for connection wiring to the driver circuit side were formed by patterning the stripe electrodes extending from a portion where the anisotropic conductive connecting material was to be arranged, in an L shape bent at 90 degrees toward a portion where flexible cables for connection to the driver circuit was to be arranged, so that the connecting terminal areas to be provided on the third substrate with respect to the driver circuit side be all formed on the same one side, which was the same side as the connecting terminal areas to be provided on the second substrate with respect to the driver circuit side. The line electrodes in stripes may be formed into any shape, when bent at 90 degrees, including an arc and a shape defined by contiguous obtuse angles, other than the L shape.
Further, in Examples described below, the conductive films to be provided on the first substrate and the second substrate of the information display panel each were formed as stripe electrodes with 600 lines and stripe electrodes with 800 lines, respectively, which were both formed through patterning of a transparent ITO film of 100 nm in thickness.
In this manner, a dot matrix with a pixel count of 600×800 (about 100 ppi) was formed, to thereby obtain a passive drive type information display panel.
The information display panel was configured by including three 320-pin driver ICs on the row electrode side and two 320-pin driver ICs on the column electrode side, so as to be produced as an information display panel in approximately A5 size with the information display screen region in a size of 150 mm×200 mm with a diagonal of 250 mm (10 inches).

### <Example 1>

The first substrate was formed as a film with transparent electrodes which were formed of tin-doped indium oxide (ITO) in stripes on a transparent polyethylene terephthalate (PET) resin substrate of 125 µm in thickness. Electrodes using tin-doped indium oxide (ITO) were formed in stripes on a transparent PET resin substrate of 125 µm in thickness, in a direction orthogonal to the stripe electrodes formed on the first substrate, to thereby form the second substrate. The electrodes on the second substrate were electrically connected, in a portion outside the information display screen region, to a TCP mounted with a driver IC, by using an ACF. As the third substrate, a polyimide film (of 80 µm in thickness) laminated with copper foil was subjected to etching, to thereby form copper electrodes patterned in L-shaped stripes. The electrodes on the first substrate and the electrodes on the third substrate were electrically connected to each other outside the information display screen region, by using an ACF. Further, the electrodes on the third substrate were also connected, in a portion opposite to the portion where the electrodes formed on the third substrate were connected to the first substrate, to a TCP mounted with a driver IC, by using an ACF. The driver IC-mounted TCP with a driver IC connected to the second substrate and the third substrate was connected to a driver circuit side by using a connecter, so as to perform display in the information display screen region. As a result, excellent display was performed without causing any disconnection or leakage across the rows and lines.

### <Example 2>

The first substrate was formed as a film with transparent electrodes which were formed of tin-doped indium oxide (ITO) in stripes on a transparent PET resin substrate of 125 µm in thickness. Electrodes using tin-doped indium oxide (ITO) were formed in stripes on a transparent PET resin substrate of 125 µm in thickness, in a direction orthogonal to the stripe electrodes formed on the first substrate, to thereby form the second substrate. The electrodes on the second substrate were electrically connected, in a portion outside the information display screen region, to a TCP mounted with a driver IC, by using an ACF. Formed as the third substrate was an electrode film on which aluminum electrodes patterned in L-shaped stripes were formed on a transparent PET film of 125 µm in thickness. The electrodes on the first substrate and the electrodes on the third substrate were electrically connected to each other outside the information display screen region, by using an ACF. Further, the electrodes on the third substrate were also connected, in a portion opposite to the portion where the electrodes formed on the third substrate were connected to the first substrate, to a TCP mounted with a driver IC, by using an ACF. The TCP with a driver IC connected to the second substrate and to the third substrate was connected to a driver circuit side by using a connecter, to thereby perform display in the information display screen region. As a result, excellent display was performed without causing any disconnection or leakage across the rows and lines.

### <Example 3>

The first substrate was formed as a film with transparent electrodes which were formed of tin-doped indium oxide in stripes on a transparent PET resin substrate of 250 µm in thickness. Electrodes using tin-doped indium oxide (ITO) were formed in stripes on a transparent PET resin substrate of 200 µm in thickness, in a direction orthogonal to the stripe electrodes formed on the first substrate, to thereby form the second substrate. The electrodes on the second substrate were electrically connected, in a portion outside the information display screen region, to a TCP mounted with a driver IC, by using an ACF. As the third substrate, a polyimide film (of 80 µm in thickness) laminated with copper foil was subjected to etching, to thereby form copper electrodes patterned in L-shaped stripes. The electrodes on the first substrate and the electrodes on the third substrate were electrically connected to each other outside the information display screen region, by using an ACF. Further, the electrodes on the third substrate were also connected, in a portion opposite to the portion where the electrodes formed on the third substrate were connected to the first substrate, to a TCP mounted with a driver IC, by using an ACF. The driver IC-mounted TCP connected to the second substrate and to the third substrate was connected to a driver circuit side by using a connecter, to thereby perform display in the information display screen region. As a result, excellent display was performed without causing any disconnection or leakage across the rows and lines.

### <Example 4>

The first substrate was formed as a film with transparent electrodes which were formed of tin-doped indium oxide in stripes on a transparent PET resin substrate of 250 µm in thickness. Electrodes using tin-doped indium oxide (ITO) were formed in stripes on a transparent PET resin substrate of 250 µm in thickness, in a direction orthogonal to the stripe electrodes formed on the first substrate, to thereby form the second substrate. The electrodes on the second substrate were electrically connected, in a portion outside the information display screen region, to a TCP mounted with a driver IC, by using an ACF. Formed as the third substrate was an electrode film in which aluminum electrodes patterned in L-shaped stripes were formed on a transparent PET film of 100 µm in thickness. The electrodes on the first substrate and the electrodes on the third substrate were electrically connected to each other outside the information display screen region, by using an ACF. Further, the electrodes on the third substrate were also connected, in a portion opposite to the portion where the electrodes formed on the third substrate were connected to the first substrate, to a TCP mounted with a driver IC, by using an ACF. The driver IC-mounted TCP connected to the second substrate and to the third substrate was connected to a driver circuit side by using a connecter, to thereby perform display in the information display screen region. As a result, some of the electrodes on the first substrate were found disabled in line due to disconnection. As a result of detailed observation of the display panel that had suffered such trouble, it was found that the aluminum electrode on the third electrode film was disconnected due to a damage caused by the difference in level on an edge portion of the second electrode film.

### <Example 5>

The first substrate was formed as a film with transparent electrodes which were formed of tin-doped indium oxide (ITO) in stripes on a transparent PET resin substrate of 125 µm in thickness. Electrodes using tin-doped indium oxide (ITO) were formed in stripes on a transparent PET resin substrate of 25 µm in thickness, in a direction orthogonal to the stripe electrodes formed on the first substrate, to thereby form the second substrate. The electrodes on the second substrate were electrically connected, in a portion outside the information display screen region, to a TCP mounted with a driver IC, by using an ACF. As the third substrate, a polyimide film (of 25 µm in thickness) laminated with copper foil was subjected to etching, to thereby form copper electrodes patterned in L-shaped stripes. The electrodes on the first substrate and the electrodes on the third substrate were electrically connected to each other outside the information display screen region, by using an ACF. Further, the electrodes formed on the third substrate were also connected, in a portion opposite to the portion where the electrodes formed on the third substrate were connected to the first substrate, to a TCP mounted with a driver IC, by using an ACF. The driver IC-mounted TCP connected to the second substrate and to the third substrate was connected to a driver circuit side by using a connecter, to thereby perform display in the information display screen region. As a result, excellent display was performed without causing any disconnection or leakage across the rows and lines.

### <Example 6>

The first substrate was formed as a film with transparent electrodes which were formed of tin-doped indium oxide (ITO) in stripes on a transparent PET resin substrate of 125 µm in thickness. Electrodes using tin-doped indium oxide (ITO) were formed in stripes on a transparent PET resin substrate of 25 µm in thickness, in a direction orthogonal to the stripe electrodes formed on the first substrate, to thereby form the second substrate. The electrodes on the second substrate were electrically connected, in a portion outside the information display screen region, to a TCP mounted with a driver IC, by using an ACF. As the third substrate, a polyimide film (of 200 µm in thickness) laminated with copper foil was subjected to etching, to thereby form copper electrodes patterned in L-shaped stripes. The electrodes on the first substrate and the electrodes on the third substrate were electrically connected to each other outside the information display screen region, by using an ACF. Further, the electrodes on the first substrate and the electrodes on the third substrate were also connected, in a portion opposite to the portion where the electrodes formed on the third substrate were connected to the first substrate, to a TCP mounted with a driver IC, by using an ACF. The driver-IC mounted TCP connected to the second substrate and to the third substrate was connected to a driver circuit side by using a connecter, to thereby perform display in the information display screen region. As a result, excellent display was performed without causing any disconnection or leakage across the rows and lines.

### [As to Second Example (which employs a plurality of Third Substrates having L-shaped Line Electrodes formed thereon)]

An information display panel according to a second example of the present invention, which is configured as a dot matrix information display panel, includes: a first substrate on which transparent stripe electrodes are formed in an information display screen region and line electrodes drawn from the stripe electrodes are formed in a region outside the information display screen region; a film-like second substrate on which stripe electrodes are formed in the information display screen region and line electrodes drawn from the stripe electrodes are formed in a region outside the information display screen region; and a film-like third substrate on which L-shaped line electrodes are formed, the L-shaped line electrodes serving as connection wiring to a driver circuit, in which the transparent stripe electrodes on the first substrate and the stripe electrodes on the second substrate are orthogonally opposed to each other, and at least two kinds of display media configured as particle groups containing electrically charged particles are sealed in a space between the first substrate and the second substrate which are opposed to each other in the information display screen region while the first substrate, the second substrate, and the film-like third substrate having the L-shaped line electrodes formed thereon are arranged as being superposed one another in the stated order so that the line electrodes drawn from the stripe electrodes on the first substrate and the L-shaped line electrodes formed on the third substrate are electrically connected to each other; and in which the stripe electrodes opposing to each other form electrode pairs to which a voltage controlled by the driver circuit is applied so as to generate an electric field for causing the display media to move, to thereby display information. The information display panel is characterized in that a plurality of the film-shaped third substrate having L-shaped line electrodes formed thereon is employed.

In the following, specific examples of the information display panel according to the second example of the present invention are described with reference to the drawings.

### <Fourth Embodiment>

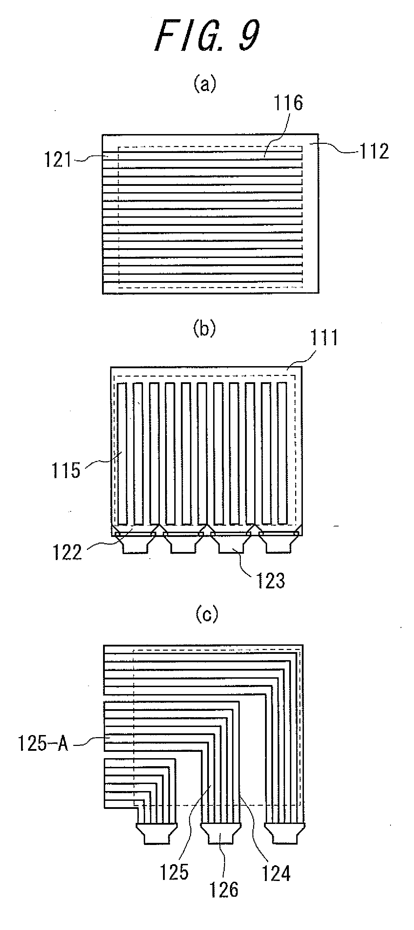

Figs. 9(a) to 9(c) are views for illustrating a fourth embodiment in which the first substrate, the second substrate, and a plurality of the third substrates having L-shaped line electrodes formed thereon according to the second example of the present invention are employed for forming the information display panel. The fourth embodiment illustrated in Figs. 9(a) to 9(c) illustrates an example in which connection on the driver circuit side is performed on the same one side.

First, the first substrate (observation-side substrate) 112 illustrated in Fig. 9(a) is configured as a transparent substrate in which transparent stripe electrodes (transparent conductive film) 116 are formed in an information display screen region (region surrounded by the dotted lines in the drawing) and line electrodes (conductive film) 121 drawn from the stripe electrodes 116 are formed in a region outside the information display screen region. Next, the second substrate (back-side substrate) 111 illustrated in Fig. 9(b) is configured as a film-like substrate in which stripe electrodes (conductive film) 115 are formed in the information display screen region and line electrodes (conductive film) 122 drawn from the stripe electrodes 115 are formed in a region outside the information display screen region. The line electrodes 122 grouped correspondingly to the number of connecting terminals of a driver IC are connected, at one side of the panel, to flexible cables (also called TCP) 123 each having a driver IC, which is to be connected to an external driver circuit side, mounted therein through TAB. The second substrate 111 is preferred to be as small as possible in thickness, and the film-like second substrate 11 may be preferred to be 25 µm to 200 µm in thickness. Next, the third substrate 124 illustrated in Fig. 9(c) employs flexible cables in which L-shaped line electrodes (conductive film) 125, which are to serve as connection wiring to a driver circuit side, are formed. Here, three L-shaped flexible cables are employed so as to correspond to the L-shaped line electrodes that are formed in accordance with the number of driver ICs required. The electrodes 125 are formed correspondingly to the number of connecting terminals of a driver IC, and connected, at the same one side on which the flexible cables 123 of the second substrate are arranged, to the flexible cables 126 on an external driver circuit side. It should be noted that the flexible cables 123 and 126 may preferably be provided with driver ICs which may be mounted through TAB or COF.

In this example, the arrangement of the line electrodes 121 drawn from the stripe electrodes 116 to the region outside the information display screen region on the first substrate 112 and leading ends 125-A of the electrodes 125 formed on the L-shaped flexible cable 124, the leading ends being arranged in a region outside the information display screen region, the region being opposite to a side on which the electrodes 125 are connected to the flexible cables 126, are made such that, when the first substrate 112, the second substrate 111, and the L-shaped flexible cables 124 are superposed one another, the line electrodes 121 and the leading ends 125-A are arranged in corresponding positions, preferably, in positions opposing to each other in a corresponding manner. Further, in this example, the L-shaped flexible cables 124 are adjusted in length in the lateral direction of the drawing so that the flexible cables 123 of the second substrate and the flexible cables 126 (tape carrier package (TCP) is employed herein) of the L-shaped flexible cables 124 are alternately arranged when the first substrate 112, the second substrate 111, and the third substrate 124 are superposed one another. In this regard, even if the flexible cables 123 and the flexible cables 126 overlap each other in the same position, connection via the flexible cables can still be made without any problem through appropriate arrangement of connectors to be connected to the flexible cables, because the flexible cables 123 and the flexible cables 126 are provided to different substrates.

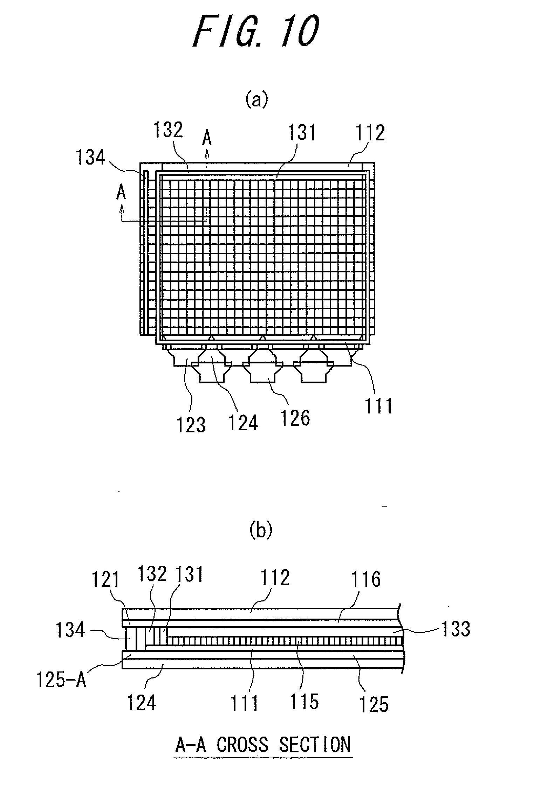

Figs. 10(a) and 10(b) are views for illustrating an example of the information display panel according to the second example of the present invention, in which Fig. 10(a) illustrates the information display panel viewed from the observation surface side and Fig. 10(b) is a schematic cross section taken along the line A-A of Fig. 10(a). In the example illustrated in Figs, 10(a) and 10(b), each constituent element is illustrated in dimension different in ratio from the actual dimension, and the illustration of some of the constituent elements is omitted, for a better understanding of the features of the information display panel according to the first example of the present invention. The example illustrated in Figs. 10(a) and 10(b) includes the first substrate 112, the second substrate 111, and the L-shaped flexible cables 124 corresponding to the third substrates having the L-shaped line electrodes formed thereon, of Figs. 9(a) to 9(c), which are superposed one another in the stated order, to thereby form the information display panel.

In the example illustrated in Fig. 10(a) and 10(b), in which the first substrate 112, the second substrate 111, and the L-shaped flexible cables 124 are superposed one another, a frame-shaped sealing agent 132 is provided around the outer circumference of an inter-substrate gap securing partition wall 131 between the first substrate 112 and the second substrate 111, in the periphery of the information display screen region. Further, a display medium configured as a particle group containing electrically charged particles is sealed in a display medium accommodating layer 133 between the first substrate 112 and the second substrate 111. Each of the transparent stripe electrodes 116 formed on the first substrate 112 and each of the stripe electrodes 115 formed on the second substrate 111 are orthogonally opposed to each other so as to form an electrode pair, through which the display medium is applied with an electric field so as to be passively driven to perform dot matrix display, to thereby form an information display panel of dot matrix display system. It should be noted that the example of Figs. 10(a) and 10(b) merely illustrates the display medium accommodating layer 133, without illustrating the display medium. The inter-substrate gap securing partition wall 131, the frame-shaped sealing agent 132, and the sealing of the display medium are configured similarly as in the case of an information display panel hitherto known.

One of the most distinctive features of the information display panel according to the second example of the present invention resides in that, as in the example illustrated in Figs. 10(a) and 10(b), the line electrodes 121 drawn from the stripe electrodes 116 to the region outside the information display screen region on the first substrate 112 and the leading ends 125-A of the L-shaped line electrodes 125 formed on the plurality of the film-like third substrates (three L-shaped flexible cables herein) 124 having L-shaped line electrodes formed thereon, the leading end being arranged in a region outside the information display screen region, the region being opposite to a side on which the electrodes 125 are connected to the flexible cables 126, are electrically connected to each other, on an external one side of the inter-substrate gap securing partition wall 31 and the frame-shaped sealing member 32, via an anisotropic conductive connecting material 134 such as an anisotropic conductive film (ACF), to thereby establish conduction between the substrates. The anisotropic conductive film (ACF) is formed of an anisotropic conductive connecting material made of a non-conductive resin containing conductive particles, and electric connection using the ACF is similarly performed as in a conventionally-known example. It should be noted that an anisotropic conductive paste (ACP) may also be used, instead of the anisotropic conductive film (ACF).

According to the information display panel of the second example of the present invention described above, the line electrodes 121 drawn from the stripe electrodes 116 of the first substrate 112 and the leading ends 125-A of the L-shaped line electrodes 125 of the plurality of the film-like third substrates (three L-shaped flexible cables herein) 124 having L-shaped line electrodes formed thereon are connected to each other through the anisotropic conductive connecting material 134, to thereby apply a driving voltage to the stripe electrodes 116 of the first substrate 112 via the electrodes 125 on the L-shaped flexible cables 124, the anisotropic conductive connecting material 134, and the line electrodes 121. The present invention enables to form the above-mentioned configuration merely by using the anisotropic conductive connecting material 134 provided in a region outside the information display screen region, with the result that the frame can be narrowed as compared to the conventional case. Further, in the case of performing connection to the driver circuit on the same one side, the flexible cables 123 and the flexible cables 125 are allowed to overlap each other because the flexible cables 123 and the flexible cables 126 can be formed on different surfaces.

### <Fifth Embodiment>

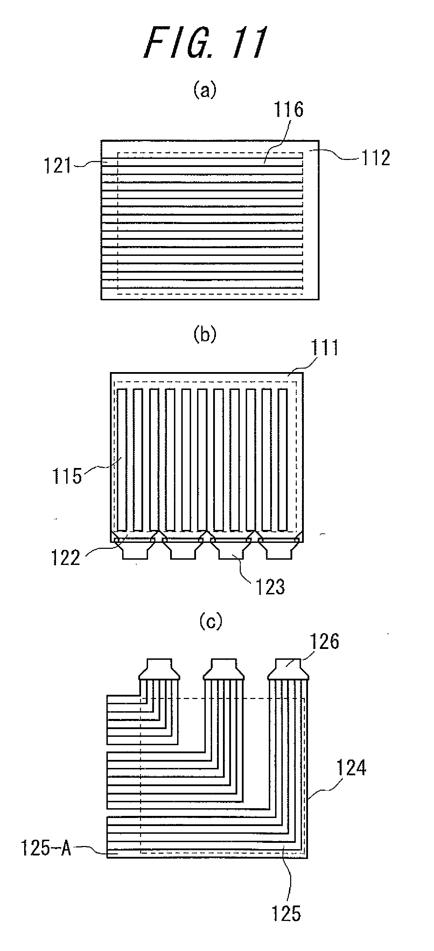

Figs. 11(a) to 11(c) are views for illustrating a fifth embodiment in which the first substrate, the second substrate, and a plurality of the third substrates having L-shaped line electrodes formed thereon according to the second example of the present invention are employed for forming the information display panel, The fifth embodiment illustrated in Figs. 11(a) to 11(c) illustrates an example in which connection on the driver circuit side is performed on two sides opposing to each other.

First, the first substrate (observation-side substrate) 112 illustrated in Fig. 11(a) is configured as a transparent substrate in which the transparent stripe electrodes (transparent conductive film) 116 are formed in the information display screen region (region surrounded by the dotted lines in the drawing) and the line electrodes (conductive film) 121 drawn from the stripe electrodes 116 are formed in a region outside the information display screen region. Next, the second substrate (back-side substrate) 111 illustrated in Fig. 11(b) is configured as a film-like substrate in which the stripe electrodes (conductive film) 115 are formed in the information display screen region and the line electrodes (conductive film) 122 drawn from the stripe electrodes 115 are formed in a region outside the information display screen region. The line electrodes 122 grouped correspondingly to the number of connecting terminals of a driver IC are connected, at one side of the panel, to the flexible cables (also called TCP) 123 each having a driver IC to be connected to an external driver circuit side, mounted thereon. The second substrate 11 is preferred to be as small as possible in thickness. Next, the third substrates 124 having the L-shaped line electrodes formed thereon as illustrated in Fig. 11(c) are formed of L-shaped flexible cables on which the L-shaped line electrodes (conductive film) 125, which are to serve as connection wiring to a driver circuit, are formed. Here, three L-shaped flexible cables are employed so as to correspond to the stripe electrodes on the first substrate. The electrodes 125 are formed correspondingly to the number of connecting terminals of a driver IC, and connected, at a side opposing to the side on which the flexible cables 123 of the second substrate are arranged, to an external driver circuit side via the plurality of the flexible cables 126.

In this example, the arrangement of the line electrodes 121 drawn from the stripe electrodes 116 to the region outside the information display screen region on the first substrate 112 and the leading ends 125-A of the electrodes 125 formed on the L-shaped flexible cable 124, the leading ends being arranged in a region outside the information display screen region of the first substrate, the region being opposite to a side on which the electrodes 125 are connected to the flexible cables 126, are made such that, when the first substrate 112, the second substrate 111, and the L-shaped flexible cables 124 are superposed one another, the line electrodes 121 and the leading ends 125-A are arranged in corresponding positions, preferably, in positions opposing to each other in a corresponding manner.

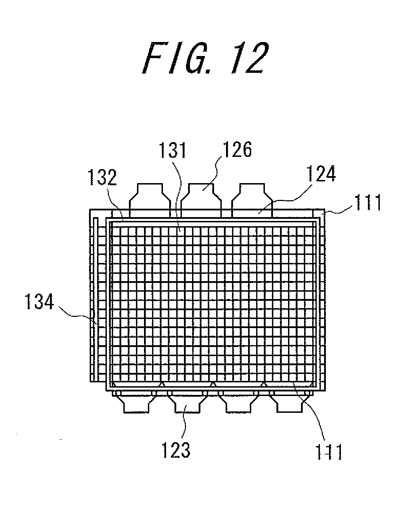

Fig. 12 is a view for illustrating another example of the information display panel according to the second example of the present invention. In the example illustrated in Fig. 12, each constituent element is illustrated in dimension different in ratio from the actual dimension, and the illustration of some of the constituent elements is omitted, for a better understanding of the features of the information display panel according to the second example of the present invention. The example illustrated in Fig. 12 includes the first substrate 112, the second substrate 111, and three L-shaped flexible cables 124 of Figs. 11(a) to 11(c), which are superposed one another in the stated order, to thereby form the information display panel. Even in the example illustrated in Fig. 12, the configuration and effect of the anisotropic conductive connecting material 134 using the L-shaped flexible cables 124, which characterizes the information display panel according the present invention, is similar to that of the examples of the fourth embodiment described above.

### <Sixth Embodiment>>

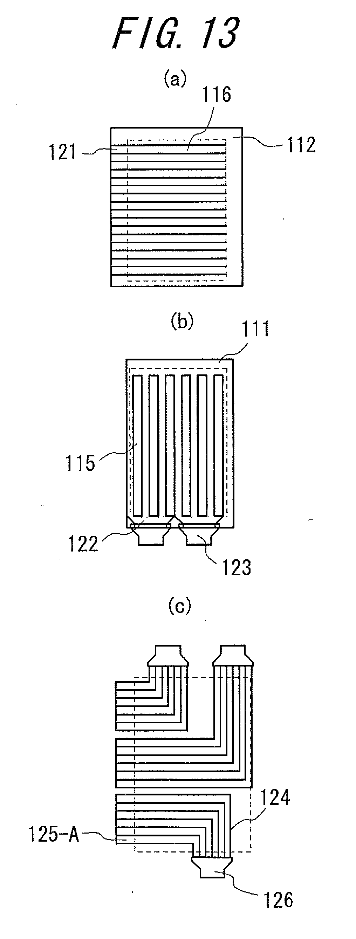

Figs. 13(a) to 13(c) are views for illustrating a sixth embodiment in which the first substrate, the second substrate, and a plurality of the third substrates having L-shaped line electrodes formed thereon according to the second example of the present invention are employed for forming the information display panel. The sixth embodiment illustrated in Figs. 13(a) to 13(c) illustrates an example in which connection on the driver circuit side is performed on two sides opposing to each other.

First, the first substrate (observation-side substrate) 112 illustrated in Fig. 13(a) is configured as a transparent substrate in which the transparent stripe electrodes (transparent conductive film) 116 are formed in the information display screen region (region surrounded by the dotted lines in the drawing) and the line electrodes (conductive film) 121 drawn from the stripe electrodes 116 are formed in a region outside the information display screen region. Next, the second substrate (back-side substrate) 111 illustrated in Fig. 13(b) is configured as a film-like substrate in which the stripe electrodes (conductive film) 115 are formed in the information display screen region and the line electrodes (conductive film) 122 drawn from the stripe electrodes 115 are formed in a region outside the information display screen region. The line electrodes 122 grouped correspondingly to the number of connecting terminals of a driver IC are connected, at one side of the panel, to the flexible cables (also called TCP) 123 each having a driver IC, which is to be connected to an external driver circuit side, mounted therein through TAB. The second substrate 111 is preferred to be as small as possible in thickness. Next, the third substrate 124 having the L-shaped line electrodes formed thereon as illustrated in Fig. 13(c) is formed of L-shaped flexible cables on which the L-shaped line electrodes (conductive film) 125 to serve as connection wiring to a driver circuit are formed. Here, three L-shaped flexible cables are employed so as to correspond to the stripe electrodes on the first substrate. The electrodes 125 are grouped for each region, and connected, at two sides, namely, a side on which the flexible cables 123 of the second substrate are arranged and a side opposing thereto, to the plurality of the flexible cables (also called TCP) 126 each having a driver IC, which is to be connected to an external driver circuit side, mounted therein through TAB.

In this example, the arrangement of the line electrodes 121 drawn from the stripe electrodes 116 to the region outside the information display screen region on the first substrate 112 and the leading ends 125-A of the electrodes 125 formed in a region outside the information display screen region on the film-like third substrates (formed of three L-shaped flexible cables herein) 124 having a plurality of the L-shaped line electrodes formed thereon, the leading ends being arranged in a region opposite to a side on which the electrodes 125 are connected to the flexible cables 126, are made such that, when the first substrate 112, the second substrate 111, and the L-shaped flexible cables 124 are superposed one another, the line electrodes 121 and the leading ends 125-A are arranged in corresponding positions, preferably, in positions opposing to each other in a corresponding manner.

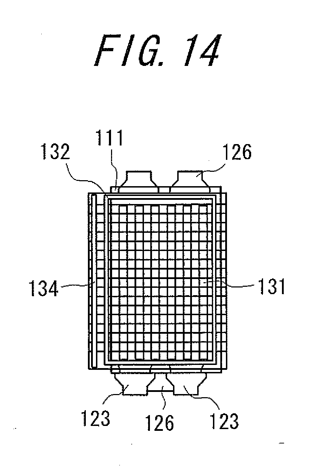

Fig. 14 is a view for illustrating further another example of the information display panel according to the second example of the present invention. In the example illustrated in Fig. 14, each constituent element is illustrated in dimension different in ratio from the actual dimension, and the illustration of some of the constituent elements is omitted, for a better understanding of the features of the information display panel according to the first embodiment of the present invention. The example illustrated in Fig. 14 includes the first substrate 112, the second substrate 111, and the three L-shaped flexible cables 124 of Figs. 13(a) to 13(c), which are superposed one another in the stated order, to thereby form the information display panel. Even in the example illustrated in Fig. 14, the configuration and effect of the anisotropic conductive connecting material 134 using the L-shaped flexible cables 124, which characterizes the information display panel according the present invention, is similar to that of the examples of the fourth embodiment described above.

### <Seventh Embodiment>

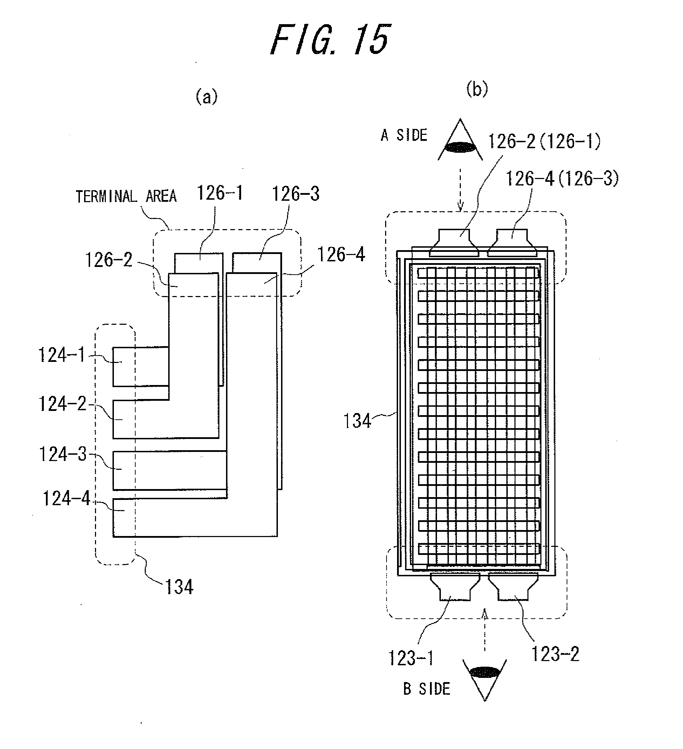

Figs. 15(a) and 15(b) are views for illustrating a seventh embodiment in which the first substrate, the second substrate, and a plurality of the third substrates having L-shaped line electrodes formed thereon according to the second example of the present invention are employed for forming the information display panel. Fig. 15(a) shows four L-shaped flexible cables 124 serving as the third substrates having L-shaped line electrodes formed thereon, and Fig. 15(b) shows an information display panel including the first substrate 112 and the second substrate 111 superposed one another. The third substrates having the L-shaped line electrodes of this example formed thereon are illustrated as four L-shaped flexible cables 124-1 to 124-4. A terminal area of the electrodes (not shown in the drawing) 125 to be connected to the flexible cables 126-1 to 126-4 provided on a side opposite to the anisotropic conductive connecting material (ACF) 134 is arranged on a short side of the panel, the side opposing to a side on which the flexible cables 123-1 and 123-2 provided to the second substrate 111 are arranged. In the terminal area, the flexible cables 124-1 to 124-4 are arranged in such a manner that the flexible cables 124-1 and 124-2 are superposed each other while the flexible cables 124-3 and 124-4 are superposed each other.

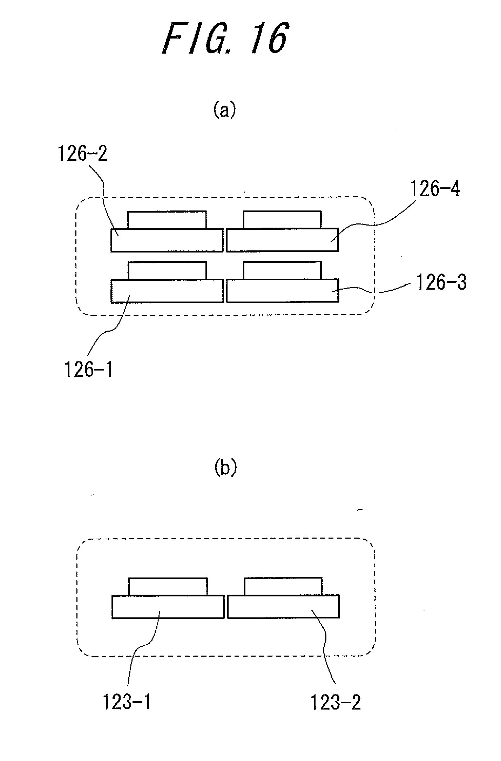

Figs. 16(a) and 16(b) are schematic diagrams each illustrating a driver IC mounting area at an end face of the information display panel, which are viewed from the side A and the side B of Fig. 15(b), respectively. In the example illustrated in Fig. 16(a) viewed from the side A, four driver-IC equipped flexible cables (also called TCP) 126-1 to 126-4 mounted on the L-shaped flexible cables 124-1 to 124-4 are arranged in such a manner that the flexible cables 126-1 and 126-2 overlap each other while the flexible cables 126-3 and 126-4 overlap each other. In the example illustrated in Fig. 16(b) viewed from the side B, two driver-IC equipped flexible cables 123-1 and 123-2 mounted on a short side of the second substrate 111 are arranged parallel to each other.

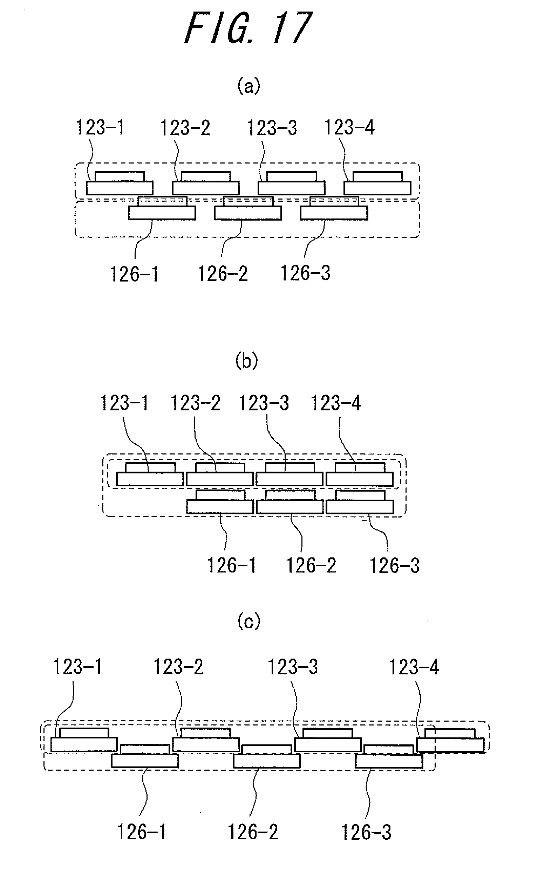

Figs. 17(a) to 17(c) are views for illustrating the driver IC mounting area in other arrangement examples, than the example illustrated in Figs. 16(a) and 16(b), of the flexible cables at the end of the information display panel according to the present invention. In the example illustrated in Fig. 17(a), the flexible cables 123-1 to 123-4 and the flexible cables 126-I to 126-3 are alternately arranged in two stages. In the example illustrated in Fig. 17(a), the flexible cables (also called TCP) each being mounted with a driver IC are arranged in two stages, which leads to a reduction in width. In the example illustrated in Fig 17(b), the flexible cables 123-1 to 123-4 and the flexible cables 126-1 to 126-3 are arranged parallel to one another for the same surface on the same one side. In the example illustrated in Fig. 17(c), the flexible cables 123-1 to 123-4 and the flexible cables 126-1 to 126-3 are arranged parallel to one another so that the driver ICs alternately arranged on the TCP are superposed one another.

In the following, actual examples of the information display panel according to the second example are described. It should be noted that Examples 11 to 16 described in below were configured as follows. That is, the line electrodes patterned in L-shaped stripes had connecting terminal areas to a driver circuit side all provided on the same one side, which was the same side as the connecting terminal area to be provided on the second substrate with respect to the driver circuit side, to thereby form the display panel configured as illustrated in Fig. 10.
Further, in Examples described below, the conductive films to be provided on the first substrate and the second substrate of the information display panel each were formed as stripe electrodes with 600 lines and stripe electrodes with 800 lines, respectively, which were both formed through patterning of a transparent ITO film of 100 nm in thickness.
In this manner, a dot matrix with a pixel count of 600×800 (about 100 ppi) was formed, to thereby obtain a passive drive type information display panel.
The information display panel was configured by including three 320-pin driver ICs on the row electrode side and two 320-pin driver ICs on the column electrode side, so as to be produced as an information display panel in approximately A5 size with the information display screen region in a size of 150 mmx200 mm with a diagonal of 250 mm (10 inches).

### <Example 11 >

The first substrate was formed as a film with transparent electrodes which were formed of tin-doped indium oxide (ITO) in stripes on a transparent polyethylene terephthalate (PET) resin substrate of 125 µm in thickness. Electrodes using tin-doped indium oxide (ITO) were formed in stripes on a transparent PET resin substrate (second substrate) of 125 µm in thickness, in a direction orthogonal to the stripe electrodes formed on the transparent polyethylene terephthalate (PET) resin substrate (first substrate) of 125 µm in thickness, to thereby form the second substrate. The electrodes on the second substrate were electrically connected, in a portion outside the information display screen region, to a flexible cable (also called TCP) mounted with a driver IC, by using an anisotropic conductive film (ACF). As the L-shaped flexible cables, a polyimide film laminated with copper foil was subjected to etching, to thereby form copper electrodes patterned in L-shaped stripes along the L-shaped film of 80 µm in thickness. Three of the L-shaped flexible cables were employed so that the number of the electrode lines on the first substrate be matched with the driver ICs mounted on the flexible cables. The electrodes on the first substrate and the three L-shaped flexible cables were electrically connected to each other outside the information display screen region by using the same ACF as described above. Further, the L-shaped flexible cables were electrically connected, at the end in a portion opposite to the portion where the electrodes formed on the L-shaped flexible cables were connected to the first substrate, to a TCP mounted with a driver IC, by using the same ACF as described above. The second substrate and the driver IC-mounted TCP connected to the L-shaped flexible cables were connected to a driver circuit side by using a connecter, so as to display a test image on the information display panel. As a result, excellent display was performed without causing any disconnection or leakage across the rows and lines.

### <Example 12>

The first substrate was formed as a film with transparent electrodes which were formed of tin-doped indium oxide (ITO) in stripes on a transparent PET resin substrate of 125 µm in thickness. Electrodes using tin-doped indium oxide (ITO) were formed in stripes on a transparent PET resin substrate (second substrate) of 125 µm in thickness, in a direction orthogonal to the stripe electrodes formed on the transparent polyethylene terephthalate (PET) resin substrate (first substrate) of 125 µm in thickness, to thereby form the second substrate. The electrodes on the second substrate were electrically connected, in a portion outside the information display screen region, to a TCP mounted with a driver IC, by using an ACF. Prepared as the L-shaped flexible cables were aluminum electrodes, which were formed in stripes along the L-shaped transparent PET film of 125 µm in thickness. Three of the L-shaped flexible cables were employed so that the number of the electrode lines on the first substrate be matched with the driver ICs mounted on the flexible cables. The electrodes on the first substrate and the three L-shaped flexible cables were electrically connected to each other outside the information display screen region by using the same ACF as described above. Further, the L-shaped flexible cables were electrically connected, at the end in a portion opposite to the portion where the electrodes formed on the third substrate were connected to the first substrate, to a TCP mounted with a driver IC, by using the same ACF as described above. The second substrate and the driver IC-mounted TCP connected to the L-shaped flexible cables were connected to a driver circuit side by using a connecter, so as to display a test image on the information display panel. As a result, excellent display was performed without causing any disconnection or leakage across the rows and lines. The ACF used herein was the same as that of Example 11.

### <Example 13>

The first substrate was formed as a film with transparent electrodes which were formed of tin-doped indium oxide (ITO) in stripes on a transparent PET resin substrate of 250 µm in thickness. Electrodes using tin-doped indium oxide (ITO) were formed in stripes on a transparent PET resin substrate (second substrate) of 200 µm in thickness, in a direction orthogonal to the stripe electrodes formed on the transparent polyethylene terephthalate (PET) resin substrate (first substrate) of 250 µm in thickness, to thereby form the second substrate. The electrodes on the second substrate were electrically connected, in a portion outside the information display screen region, to a TCP mounted with a driver IC, by using an ACF which is the same as that used in Example 1. As the L-shaped flexible cables, a polyimide film of 50 µm in thickness, which was laminated with copper foil, was subjected to etching, to thereby form copper electrodes patterned in L-shaped stripes, Two of the L-shaped flexible cables were employed so that the number of the electrode lines on the first substrate be matched with the driver ICs. The electrodes on the first substrate and the two L-shaped flexible cables were electrically connected to each other outside the information display screen region by using the same ACF as described above, Further, the L-shaped flexible cables were electrically connected, at the end in a portion opposite to the portion where the electrodes formed on the L-shaped flexible cables were connected to the first substrate, to a TCP mounted with a driver IC, by using the same ACF as described above. The second substrate and the TCP with the driver ICs connected to the L-shaped flexible cables were connected to a driver circuit side by using a connecter, so as to display a test image on the information display panel. As a result, excellent display was performed without causing any disconnection or leakage across the rows and lines. The ACF used herein was the same as that of Example 11.

### <Example 14>

The first substrate was formed as a film with transparent electrodes which were formed of tin-doped indium oxide (ITO) in stripes on a transparent PET resin substrate of 250 µm in thickness. Electrodes using tin-doped indium oxide (ITO) were formed in stripes on a transparent PET resin substrate (second substrate) of 25 µm in thickness, in a direction orthogonal to the stripe electrodes formed on the transparent polyethylene terephthalate (PET) resin substrate (first substrate) of 250 µm in thickness, to thereby form the second substrate. The electrodes on the second substrate were electrically connected, in a portion outside the information display screen region, to a TCP mounted with a driver IC, by using an ACF which is the same as that used in Example 1. As the L-shaped flexible cables, a polyimide film of 25 µm in thickness, which was laminated with copper foil, was subjected to etching, to thereby form copper electrodes patterned in L-shaped stripes. Four of the L-shaped flexible cables were employed so that the number of the electrode lines on the first substrate be matched with the driver ICs mounted on the flexible cables. The electrodes on the first substrate and the four L-shaped flexible cables were electrically connected to each other outside the information display screen region by using the same ACF as described above. Further, the L-shaped flexible cables were electrically connected, at the end in a portion opposite to the portion where the electrodes formed on the L-shaped flexible cables were connected to the first substrate, to a TCP mounted with a driver IC, by using the same ACF as described above. The second substrate and the driver IC-mounted TCP connected to the L-shaped flexible cables were connected to a driver circuit side by using a connecter, so as to display a test image on the information display panel. As a result, excellent display was performed without causing any disconnection or leakage across the rows and lines. The ACF used herein was the same as that of Example 11,

### <Example 15>

The first substrate was formed as a film with transparent electrodes which were formed of tin-doped indium oxide (ITO) in stripes on a transparent PET resin substrate of 250 µm in thickness. Electrodes using tin-doped indium oxide (ITO) were formed in stripes on a transparent PET resin substrate (second substrate) of 250 µm in thickness, in a direction orthogonal to the stripe electrodes formed on the transparent polyethylene terephthalate (PET) resin substrate (first substrate) of 250 µm in thickness, to thereby form the second substrate. The electrodes on the second substrate were electrically connected, in a portion outside the information display screen region, to a TCP mounted with a driver IC, by using an ACF. Prepared as the L-shaped flexible cables were aluminum electrodes formed in L-shaped stripes along the L-shaped transparent PET film of 250 µm in thickness. Three of the L-shaped flexible cables were employed so that the number of the electrode lines on the first substrate be matched with the driver ICs mounted on the flexible cables. The electrodes on the first substrate and the three L-shaped flexible cables were electrically connected to each other outside the information display screen region by using an ACF. Further, the L-shaped flexible cables were electrically connected, at the end in a portion opposite to the portion where the electrodes formed on the L-shaped flexible cables were connected to the first substrate, to a TCP mounted with a driver IC, by using the same ACF as described above. The second substrate and the driver IC-mounted TCP connected to the L-shaped flexible cables were connected to a driver circuit side by using a connecter, so as to display a test image on the information display panel. The ACF used herein was the same as that of Example 11. As a result, some of the lines on the panel were found disabled. As a result of detailed observation of the display panel that had suffered such trouble, it was found that part of the ACF connection between the electrodes on the first substrate and the aluminum electrode on the L-shaped flexible cables had suffered a loose connection. A conceivable cause thereof is as follows. The L-shaped flexible cables were deflected to make the ACF connection. However, a force of elastic restoration was strongly exerted on the ACF connection because the L-shaped flexible cables were made of a PET film of 250 µm in thickness.

### <Example 16>

The first substrate was formed as a film with transparent electrodes which were formed of tin-doped indium oxide (ITO) in stripes on a transparent PET resin substrate of 125 µm in thickness. Electrodes using tin-doped indium oxide (ITO) were formed in stripes on a transparent PET resin substrate (second substrate) of 125 µm in thickness, in a direction orthogonal to the stripe electrodes formed on the transparent polyethylene terephthalate (PET) resin substrate (first substrate) of 125 µm in thickness, to thereby form the second substrate. The electrodes on the second substrate were electrically connected, in a portion outside the information display screen region, to a TCP mounted with a driver IC, by using an anisotropic conductive film (ACF) containing conductive particles of 5µm in diameter. As the L-shaped flexible cables, a polyimide film of 75 µm in thickness, which was laminated with copper foil, was subjected to etching, to thereby form copper electrodes patterned in L-shaped stripes along an L-shaped film. Three of the L-shaped flexible cables were employed so that the number of the electrode lines on the first substrate be matched with the driver ICs mounted on the flexible cables. The electrodes on the first substrate and the three L-shaped flexible cables were electrically connected to each other outside the information display screen region by using the same ACF as described above. Further, the L-shaped flexible cables were electrically connected, at the end in a portion opposite to the portion where the electrodes formed on the L-shaped flexible cables were connected to the first substrate, to a TCP mounted with a driver IC, by using the same ACF as described above. In this example, the L-shaped flexible cables was mounted with the drivers on a side different by 180 degrees from Example 11, and the second substrate and the driver-IC mounted TCP connected to the L-shaped flexible cables were connected to a driver circuit side by using a connecter, so as to display a test image on the information display panel. As a result, excellent display was performed without causing any disconnection or leakage across the rows and lines.

Next, description is given of the constituent elements forming the information display panel according to the first example and the second example of the present invention.

Each pixel formed by the counter electrode pair and each cell having a combination of at least two kinds of display media arranged therein may be designed to correspond to each other, or may not be designed to correspond to each other. Each pixel and each cell may preferably designed to correspond to each other in a case where a color filter of three primary colors is used in combination with a white display medium and the black display medium to perform color display or in a case where a color display medium of three primary colors is combined with a black display medium or a white display medium to perform color display.

Partition walls may be provided between opposing substrates having a display medium arranged therebetween, to thereby form cells. Alternatively, cells may be formed as microcapsules having a display medium sealed therein. Further, in the case of providing an inter-substrate gap securing partition wall for securing a gap between the opposing substrates and a cell forming partition wall having a function of suppressing the movement of a particle group serving as the display medium in a direction parallel to the panel substrate, the inter-substrate gap securing partition wall may preferably have a width in a range of 20 µm to 100 µm, while the cell forming partition wall may preferably have a width which is made as small as possible in a range of 5 µm to 30 µm. Further, the cell forming partition wall may be smaller in height than the inter-substrate gap securing partition wall, without impairing the function of suppressing the movement of a particle group serving as the display medium in a direction parallel to the panel substrate. The cell forming partition walls may be formed in opposing positions on the panel substrates so that the cell forming partition walls may be opposed to each other when the substrates are superposed each other. In this case, the opposing portions of the partition walls may be bonded to each other, or may not be bonded to each other.

Partition wall portions to be provided for the purpose of securing a gap between the panel substrates (panel inter-substrate gap securing partition wall portions and partition wall portions for partitioning the inter-substrate space into compartments (cell forming partition wall portion) may be arranged in a grid pattern, a honeycomb pattern, or a reticular pattern. Each cell may be in any shape in section, such as a polygonal shape including a rectangular, triangular, hexagonal, and tiered octagon shape, a circular shape, an elliptical shape, a race track shape, or a combination of a plurality of shapes. A polygonal shape such as rectangle, hexagon, or tiered octagon is preferred in view of increasing the aperture ratio of the display part, while a shape defined by curves may be preferred in view of allowing the particles forming the image medium to move with ease. Further, in the case of designing pixels and cells arranged in a matrix to correspond to each other, the partition walls may preferably be formed based on a grid pattern so as to form each cell in a rectangular shape or a tiered octagon shape. From the above-mentioned point of view, a polygon with rounded corners, such as a rectangle with rounded corners or a tiered octagon with rounded corners may preferably be employed.

As a material for forming partition walls for securing the inter-substrate gap, or for partition walls for securing the inter-substrate gap and to be provided at the boundaries of display areas displaying an information image in different display colors, and for partition walls dedicated to forming cells, a dry film resist may preferably be used. As an example, ALPHA NIT2 (manufactured by Nichigo-Morton Co., Ltd.) or PDF 300 (manufactured by Nippon Steel Chemical Co., Ltd.) can be used.

A dry film resist material having a thickness corresponding to the height of a partition wall portion desired to be formed is laminated on the panel substrate, and then patterned through photolithography by using a mask in a predetermined shape.

The width of the partition wall portion for securing the inter-substrate gap may be designed to be in a range of 20 µm to 100 µm while the width of the cell forming partition wall portion may be designed to be in a range of 5 µm to 30 µm, so as to make the width of the cell forming partition wall portion to be smaller than the width of the partition wall portion for securing the inter-substrate gap, which is preferable in that the aperture ratio in the display part is increased.

As for the conductive material for use as a conductive film to be formed into electrodes through patterning, for the transparent first substrate to serve as the observation-side substrate, transparent conductive metal oxides such as indium tin oxide (ITO), indium oxide, indium zinc oxide (IZO), aluminum zinc oxide (AZO), antimony tin oxide (ATO), conductive tin oxide, and conductive zinc oxide may be used, or transparent conductive polymers such as polyaniline, polypyrrole, polythiophene, and poly (3,4-ethylenedioxythiophene)-poly-(styrenesulfonate) (PEDOT: PSS) may be used for the purpose of obtaining a transparent conductive film.

As for the conductive material for use as a conductive film to be formed into electrodes through patterning, for the second substrate and the L-shaped flexible cables, which are not disposed on the observation side, conductive metal oxides such as indium tin oxide (ITO), indium oxide, indium zinc oxide (IZO), aluminum zinc oxide (AZO), antimony tin oxide (ATO), conductive tin oxide, and conductive zinc oxide may be used, or conductive polymers such as polyaniline, polypyrrole, polythiophene, and poly (3,4-ethylenedioxythiophene)-poly-(styrenesulfonate) (PEDOT: PSS), metal such as gold, silver, copper, aluminum, nickel, and chrome, or an alloy formed primarily of these metals may be used. The conductive film to be formed into electrodes may be transparent, or may not be transparent.

As for a method of forming a conductive film to be formed into electrodes, there may be employed a method of forming the above-mentioned materials into a thin film through, for example, a sputtering method, a vacuum deposition method, a chemical vapor deposition (CVD) method, an application method, or a plating method, a method of laminating metal foil (for example, rolled copper foil), or a method of applying the conductive agent mixed in a solvent or a synthetic resin binder. The above-mentioned materials which are conductive and can be pattern-formed may be suitably used. It should be noted that the thickness of the observation-side transparent electrode may take any value as long as the conductivity can be secured without causing any problem in optical transparency, which is preferably 0.01 µm to 10 µm, and more preferably, 0.05 µm to 5 µm, Further, the thickness of the electrodes which are not provided on the observation side may take any value as long as the conductivity can be secured, and may preferably be in a range of 0.01 µm to 10 µm.

A transparent conductive material suited for the electrodes to be formed on the observation-side substrate (transparent first substrate) is smaller in flexibility as compared to a metal material. When using such a transparent conductive material for the stripe electrodes to be formed in the information display screen region or for the observation-side electrodes which are formed into line electrodes, a metal thin line may preferably used in combination for the purpose of preventing disconnection in the transparent electrode material. The metal thin line may preferably be 1 µm to 10 µm in width, so as not to interfere with the visibility of the display. For electrodes to be formed on the back-side substrate (second substrate) and on the L-shaped flexible cables, the above-mentioned metal materials, which are small in electric resistance and excellent in flexibility, may be suitably used, because there is no need to give consideration to optical transparency.

The first substrate needs to be transparent, and hence a transparent polymer film or a transparent polymer sheet made of an ester resin such as polyethylene terephthalate (PET) and polyethylene naphthalate (PEN), an olefinic resin such as polyethylene (PE) and polypropylene (PP), an acrylic resin such as polymethylmethacrylate (PMMA), polycarbonate (PC), poly ether sulphon (PES), or polyimide (PI) can be used. Alternatively, a glass sheet may also be used.

The second substrate does not need to be transparent, and hence, a polymer film or a polymer sheet made of materials similar to those described above but not transparent can be used, or any film formed of various materials can also be used. The first substrate and the third substrate are connected to each other by using an anisotropic conductive connecting material, and hence, it is preferred that the inter-substrate distance between the first substrate and the third substrate be small and that the second substrate to be disposed between the first substrate and the third substrate be thin. For this reason, a film-like substrate having a thickness in a range of 25 µm to 200 µm is suitable for the second substrate. If the second substrate exceeds 200 µm in thickness, the inter-substrate conduction using an anisotropic conductive connecting material may suffer trouble due to the above-mentioned reasons. On the other hand, the second substrate that is smaller than 25 µm in thickness is also disadvantageous in that handling of the panel during the manufacture is made difficult.

The third substrate does not need to be transparent, and hence, a polymer film or a polymer sheet made of materials similar to those described above but not transparent can be used, or any film formed of various materials can also be used. The third substrate has line electrodes for connection formed in an L shape, and the electrodes are brought into inter-substrate conduction at one end with the end of the connecting electrodes on the first substrate, and hence a film-like insulating substrate of 25 µm to 200 µm in thickness is suitable for the third substrate. If the third substrate exceeds 200 µm in thickness, there arises trouble that it may become difficult to deflect the third substrate toward the first substrate or the restoration force to be generated after the deflection may be increased, which may lead to a loose connection at the conduction contact point. On the other hand, the third substrate that is smaller than 25 µm in thickness is also disadvantageous in that handling of the panel during the manufacture is made difficult.
The first example of the present invention is configured by including one of the third substrate, while the second example of the present invention is configured by including a plurality of the third substrates. In either case, it may be configured that the L-shaped line electrodes formed on the third substrate may be left exposed or may be covered with an insulating film.
In the second example of the present invention, a plurality of the third substrates each may be formed as a film-like substrate having L-shaped line electrodes formed thereon to a necessary number. The film-like substrate may be in any shape as long as the electrical connection at connection ends at both ends of the L-shaped line electrodes can be secured. Preferably, the film-like substrate may be formed in a substantially L-shape in accordance with the L-shaped line electrodes thus formed.
The first example of the present invention employs one of the third substrate, which is formed in a film-like substrate having L-shaped line electrodes formed thereon to a necessary number. The film-like substrate may be in any shape as long as the electrical connection at connection ends at both ends of the L-shaped line electrodes can be secured. Preferably, the film-like substrate may be formed in a substantially L shape in accordance with the L-shaped line electrodes thus formed or in a substantially T shape, or may be formed in a rectangular shape or in a square shape, in accordance with the first substrate or the second substrate.

As for the conductive connecting material, an anisotropic conductive film (ACF) formed of a non-conductive thermosetting resin which contains conductive particles dispersed therein and is molded in a film-like shape or an anisotropic conductive paste (ACP) formed of a non-conductive thermosetting resin which contains conductive particles dispersed therein and is not molded in a film-like shape may be suitably used. As the conductive particles, spherical resins of about 3 µm to 5 µm in average particle size which are plated with nickel or gold on the surface thereof, or spherical resins of about 3 µm to 5 µm in average particle size which are plated outside with a conductive material may be used. Further, in the case of forming a bump in the connecting electrode portion of the first substrate or the third substrate, a non conductive film (NCF) or a non conductive paste (NCP), which contains no conductive particle, can also be used.

The third substrate is deflected, so that the first substrate, the second substrate, and the third substrate are electrically connected to one another by using a conductive connecting material in a state where the second substrate is sandwiched between the first substrate and the third substrate. In particular, in a case of using a conductive connecting material containing conductive particles, the distance between the substrates to be connected needs to be reduced to the length of the particle diameter of the conductive particles, and hence the deflection of the third substrate makes it possible to attain inter-substrate conduction regardless of the particle diameter of the conductive particles. For the reason noted above, the third substrate is formed as a film-like substrate having flexibility.

### INDUSTRIAL APPLICABILITY

The information display panel according to the present invention can be suitably used for: a display part of mobile equipment such as a laptop computer, a PDA, a mobile phone, and a handy terminal; electronic paper such as an electronic book, an electronic newspaper, and an electronic manual (instruction manual); a bulletin board such as a billboard, a poster, and a blackboard; a display part of, for example, a calculator, home electric appliances, and automobile equipment; a card display part of, for example, a loyalty point card and an IC card; a display part of, for example, an electronic advertisement, electronic point of presence or point of purchase advertising (POP), an electronic price tag, an electronic shelf label, an electronic score, and an RF-ID device; and a display part to be connected to external display rewriting means for performing rewrite of the display (so-called rewritable paper).

## Claims

1. An information display panel configured as a dot matrix type information display panel, comprising:
a first substrate on which transparent stripe electrodes are formed in an information display screen region and line electrodes drawn from the stripe electrodes are formed in a region outside the information display screen region;
a film-like second substrate on which stripe electrodes are formed in the information display screen region and line electrodes drawn from the stripe electrodes are formed in a region outside the information display screen region; and
a film-like third substrate on which L-shaped line electrodes are formed, the L-shaped line electrodes serving as connection wiring to a driver circuit,
wherein the transparent stripe electrodes on the first substrate and the stripe electrodes on the second substrate are orthogonally opposed to each other, and at least two kinds of display media configured as particle groups containing electrically charged particles are sealed in a space between the first substrate and the second substrate which are opposed to each other in the information display screen region while the first substrate, the second substrate, and the film-like third substrate having the L-shaped line electrodes formed thereon are arranged as being superposed one another in the stated order so that the line electrodes drawn from the stripe electrodes on the first substrate and the L-shaped line electrodes formed on the third substrate are electrically connected to each other; and
wherein the stripe electrodes opposing to each other form electrode pairs to which a voltage controlled by the driver circuit is applied so as to generate an electric field for causing the display media to move, to thereby display information.

2. An information display panel according to claim 1, wherein the line electrodes drawn from the stripe electrodes on the first substrate and the line electrodes on the film-like third substrate, the line electrodes on the third substrate serving as connection wiring to a driver circuit, are electrically connected to each other by means of an anisotropic conductive connecting material which is formed by including conductive particles in a non-conductive resin.

3. An information display panel according to claim 1 or 2, wherein the L-shaped line electrodes formed on the film-like third substrate are configured in such a manner that the number thereof is equal to or smaller than the number of output terminals of one driver IC disposed on the way to be connected to a driver circuit side or disposed as part of the driver circuit side, and that the number thereof corresponds to the number of stripe electrodes formed on the transparent first substrate.

4. An information display panel according to any one of claims 1 to 3, wherein the film-like third substrate is configured in such a manner that the number thereof is equal to or smaller than the number of the driver ICs disposed on the way to be connected to the driver circuit side or disposed as part of the driver circuit side, and that the number thereof corresponds to the number of driver ICs required for the number of stripe electrodes formed on the transparent first substrate.

5. An information display panel according to any one of claims 1 to 4, wherein the film-like second substrate is 25 µm to 200 µm in thickness.

6. An information display panel according to any one of claims 1 to 5, wherein the film-like third substrate is 25 µm to 200 µm in thickness.

7. An information display panel according to any one of claims 1 to 6, wherein the electrodes on the first substrate and the electrodes on the third substrates are connected through the anisotropic conductive connecting material in such a manner that the film-like third substrate is deflected so as to reduce an inter-substrate distance to a length of a particle diameter of the conductive particles contained in the anisotropic conductive connecting material.

8. An information display panel according to any one of claims 1 to 7, wherein the line electrodes for connection wiring to the driver circuit, the line electrodes being formed on the film-like third substrate, are extracted to a side of the panel to which the line electrodes drawn from the stripe electrodes on the film-like second substrate are extracted, or to a side opposite to the side of the panel to which the line electrodes drawn from the stripe electrodes on the film-like second substrate are extracted, or to the two opposing sides of the panel.
